# FASCICULE DE BREVET EUROPEEN

(11) **EP 3 770 555 B1**
(45) Date de publication et mention de la délivrance du brevet: **20.10.2021**
(21) Numéro de dépôt: 20185162.3
(22) Date de dépôt: 10.07.2020
(51) Int. Cl.: G01C 21/20, G05D 1/10, G01C 21/34, G05D 1/00, G08G 5/00

(54) **NAVIGATION BASÉE SUR UNE DIFFUSION D'INTÉRÊT MULTI-AGENTS**
NAVIGATION, DIE AUF EINER AUSSTRAHLUNG FÜR MULTIAGENTEN BASIERT
NAVIGATION BASED ON A MULTI-AGENT DIFFUSION

(30) Priorité: 25.07.2019 FR 1908417
(43) Date de publication de la demande: 27.01.2021
(73) Titulaire: THALES, 92400 Courbevoie (FR)
(72) Inventeur: GIGOMAS, Loïc, 33700 MERIGNAC (FR); THIRIET, Aurélien, 33700 MERIGNAC (FR); DUMORTIER, Nicolas, 33700 MERIGNAC (FR); DUPONT, Guillaume, 33700 MERIGNAC (FR)
(74) Mandataire: Marks & Clerk France

(56) Documents cités:
- WO-A1-2005/050135
- "Rhumbline network", Wikipedia , 11 juillet 2019 (2019-07-11), XP002798846, Extrait de l'Internet: URL:https://en.wikipedia.org/w/index.php?t itle=Rhumbline_network&oldid=905733530 [extrait le 2020-04-28]

## Description

### Domaine de l'invention

La présente invention concerne le domaine de la navigation et plus particulièrement des calculs de routes permettant d'atteindre un point cible avec évitement de zones et prise en compte des performances de vol d'un aéronef et prise en compte d'un angle d'arrivée.

### Etat de l'art précédent

Les aéronefs, par exemple les hélicoptères, doivent assurer des missions extrêmement variées, avec un équipage réduit. Les missions peuvent être tout type de mission dans lesquelles l'aéronef a besoin de rejoindre un point, par exemple des missions de sauvetage en mer ou en montagne, de ravitaillement d'une plate-forme pétrolière offshore.

Afin de réaliser une mission, l'aéronef doit suivre une route de la position initiale de l'aéronef jusqu'à une position cible. Cette route doit prendre en compte un certain nombre de contraintes telles que :
- les performances de vol de l'aéronef : la route doit rester volable dans l'enveloppe de vol de l'aéronef, par exemple en respectant son rayon de courbure minimal ;
- l'évitement de zones : par exemple, des zones délimitées par des contraintes de relief, ou tout autre zone choisie par le pilote pour sa mission ;
- des contraintes d'approche d'un objectif : selon les missions, l'approche de certains objectifs peut être associée à certaines contraintes. Par exemple, l'angle d'approche d'un aéroport ou d'une plateforme pétrolière offshore peut être contraint par les conditions météo locales, par exemple la direction du vent. L'angle d'approche du point cible peut également être contraint par la nécessité pour le pilote de voir la cible sous un certain angle pour pouvoir se poser directement.

Lors du vol, les pilotes d'un aéronef disposent d'un certain nombre d'aides au pilotage, tels que des capteurs, ou des écrans leur permettant de visualiser la position de l'aéronef et la route suivie.

Actuellement, la route est réalisée en phase de préparation de mission, et la route suivie est mise à jour manuellement par le pilote par modification de la route. La route réalisée peut être envoyée à un système FMS qui sera en charge du suivi automatique de cette route.

La dernière phase de vol est réalisée manuellement par le pilote. Par exemple, dans le cadre d'une mission de sauvetage d'un alpiniste ou du ravitaillement d'une plate-forme off-shore, l'approche du point cible est réalisée manuellement.

Cette situation présente plusieurs inconvénients.

Tout d'abord, le temps de préparation de mission se trouve allongé, puisque le pilote de l'aéronef doit non seulement définir l'objectif de la mission, mais également l'ensemble de la route, en tenant compte d'un nombre de contraintes potentiellement élevé. Ceci peut s'avérer particulièrement préjudiciable pour des missions dont le timing est critique, comme le sauvetage d'alpinistes en montagne.

Il existe également un risque que la route retenue ne soit pas optimale, du fait du nombre de paramètres à prendre en compte, comme la consommation en fuel de l'aéronef, les performances de l'aéronef, l'évolution des zones à éviter, le mouvement possible de l'objectif.

Ensuite, la nécessité pour le pilote d'adapter la route en temps réel au cours de la mission, en plus du suivi de celle-ci et de l'ensemble des tâches lui incombant peut s'avérer extrêmement complexe, et nuire à la bonne conduite de la mission tout en affectant au pilote une charge de travail excessive. Ceci est particulièrement vrai dans le cas d'un environnement dans lequel la répartition des zones à éviter évolue vite, par exemple dans une zone de météo instable avec des orages éclatant sporadiquement.

Les approches connues ne permettent pas de corriger la situation. Par exemple, les algorithmes connus de détermination d'une route sous contrainte, tels que l'algorithme D*, ne permettent pas de prendre en compte les performances de vols de l'aéronef ou les caractéristiques du FMS. Ainsi, une route créée par un tel algorithme aura de grandes chances de ne pas être acceptée par le FMS, car elle ne permet pas de respecter le taux de virage maximum accepté par l'aéronef, ou parce qu'elle est formée d'une multitude de petits segments, dont le nombre dépasse le nombre maximal de segments accepté par le FMS. De plus, le temps de calcul d'une route par un tel algorithme n'est pas déterministe, et peut s'avérer trop long pour permettre un calcul en temps réel de la route.

Le document WO2005/050135 divulgue un procédé de détermination d'un trajet de longueur minimale en présence d'un obstacle.

Il y a donc besoin d'un système permettant de générer en temps réel une route aussi courte que possible permettant à un aéronef de rejoindre un point cible, qui évite des zones déterminées, qui tient compte des contraintes d'approche de la cible, et soit acceptée par le FMS de l'aéronef.

### Résumé de l'invention

A cet effet, l'invention a pour objet une méthode de détermination d'une route d'un aéronef vers un point cible dans l'environnement de l'aéronef selon la revendication 1.

Avantageusement, la grille est construite selon une loxodromie.

Avantageusement, la grille possède une taille prédéfinie, et les cellules position de l'aéronef et cellule position du point cible ont une position prédéfinie dans la grille, et ladite méthode comprend une étape d'association à chaque cellule des coordonnées géo-référencées en fonction desdites taille et positions prédéfinies.

Avantageusement, la définition, pour un ensemble de cellules de l'au moins une grille, de coefficients d'absorption définissant la possibilité d'une trajectoire de l'aéronef de traverser les cellules, comprend la définition, autour de la position l'aéronef, d'une ellipse de cellules selon un angle de courbure maximal de l'aéronef présentant un coefficient d'absorption empêchant la diffusion de l'intérêt dans l'ensemble de cellules, incisée dans le sens du déplacement ou du décollage de l'aéronef.

Avantageusement, la définition de coefficients d'absorption comprend la définition, autour de la position du point cible, d'une ellipse de cellules présentant un coefficient d'absorption supérieur ou égal à un seuil prédéfini, dans laquelle est effectuée au moins une incision dans le sens d'au moins un secteur d'incidence pour l'approche du point cible.

Avantageusement, l'au moins une cellule autour du point cible, pour laquelle est défini un niveau d'intérêt égal à un seuil d'intérêt prédéfini, comprend toutes les cellules de l'au moins une incision.

Avantageusement, la définition de coefficients d'absorption comprend la définition, pour un ensemble de cellules dont l'un des coins au moins est situé dans une zone à éviter, d'un coefficient d'absorption supérieur ou égal à un seuil prédéfini.

Avantageusement, le critère d'arrêt est validé si au moins une condition est vérifiée parmi les conditions suivantes : le niveau d'intérêt de la cellule position de l'aéronef est supérieur à 0 ; le nombre d'itérations effectuées est inférieur ou égal à un seuil maximal d'itérations prédéfini.

Avantageusement, l'envoi de la liste de points de cheminement au système de gestion de vol comprend : la conversion de la liste de points de cheminement définis par des cellules en une liste de position géo-référencées obtenues respectivement par une interpolation linéaire des positions géo-référencées des coins des cellules ; l'envoi de la liste de positions géo-référencées au système de gestion de vol.

L'invention a également pour objet un programme d'ordinateur selon la revendication 10.

L'invention a également pour objet un système de gestion de mission d'un aéronef selon la revendication 11.

L'invention permet de générer en temps réel des routes d'aéronef aussi courtes que possible de la position d'un aéronef à la position d'un point cible, tout en évitant des zones déterminées, et tenant compte des contraintes d'approche du point cible, les routes respectant les capacités de vol de l'aéronef afin d'être volable et accepté par le FMS de l'aéronef.

L'invention permet ainsi la définition et la mise à jour d'une route d'aéronef prenant automatiquement en compte toutes les contraintes de la mission et en temps réel, ce qui allège considérablement la charge de travail du pilote.

L'invention est apte à fournir des routes aux FMS existants. De plus, les données d'entrées nécessaires à la détermination d'une route peuvent être obtenues avec les équipements, par exemple les capteurs, habituellement présents dans un aéronef. Elle est donc compatible avec ces FMS et équipements existants des aéronefs, et peut être déployée facilement dans les systèmes existants.

L'invention est apte à définir plusieurs points de départ, correspondant à plusieurs aéronefs pouvant effectuer la mission, et à sélectionner automatiquement celui pour lequel la route est la plus courte.

L'invention nécessite une quantité de calcul limitée, permettant une exécution rapide sur des capacités de calcul embarquées. De plus, le temps de calcul peut être borné en fonction de certains paramètres d'entrée tels que la taille de la grille et un nombre maximal d'itérations de diffusion. Ceci permet donc de calculer la route de l'aéronef quasi en temps réel.

D'autres caractéristiques, détails et avantages de l'invention ressortiront à la lecture de la description faite en référence aux dessins annexés donnés à titre d'exemple et qui représentent, respectivement :

la figure1 une architecture avionique dans laquelle l'invention peut être implémentée ;

la figure 2 une représentation schématique d'un environnement et d'une trajectoire de mission dans un ensemble de modes de réalisation de l'invention ;

la figure 3 un exemple de procédé de détermination d'une route d'un aéronef selon un ensemble de modes de mise en œuvre de l'invention ;

Les figures 4a, 4b, 4c, 4d, 4e, 4f, 4g, 4h, 4i, 4j des exemples d'étapes de calcul de routes d'aéronef calculés lors de la mise en œuvre de l'invention ;

la figure 5 un exemple de route d'aéronef calculée dans une mise en œuvre de l'invention.

Certains acronymes anglo-saxons couramment utilisés dans le domaine technique de la présente demande pourront être employés au cours de la description. Ces acronymes sont listés dans le tableau ci-dessous, avec notamment leur expression anglo-saxonne et leur signification.

**[Tableaux 1]**

| *Acronyme* | *Expression* | *Signification* |
|---|---|---|
| ARINC | Aeronautical Radio INCorporated | Société de Radio Aéronautique. Société détenue par de grands acteurs aéronautique américains connue pour définir les principaux standards de communication à l'intérieur des aéronefs et entre les aéronefs et le sol. Désigne à la fois la société et les standards produits, par exemple les standards ARINC 429 ou ARINC 661. |
| FMS | Flight Management System | Système de Gestion de Vol. Système informatisé permettant de calculer des trajectoires et routes d'aéronef, et de fournir les consignes de guidage adaptées au pilote ou pilote automatique pour suivre la trajectoire calculée. |
| MMS | Mission Management System | Système de Gestion de Mission : système de mission permettant au pilote d'un aéronef de superviser la mission de l'aéronef |

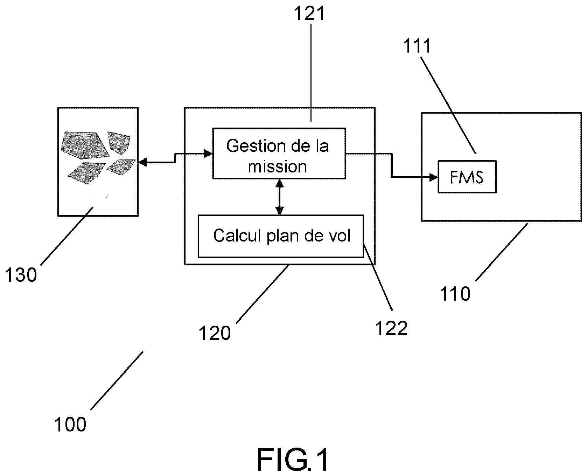

La figure 1 représente une architecture avionique dans laquelle l'invention peut être implémentée.

L'architecture avionique 100 est une architecture avionique pouvant être déployée dans un aéronef. Un des buts de l'invention est de fournir à l'équipage, en temps réel, des fonctions d'aide et d'automatisation pour la réalisation de la mission. L'architecture avionique 100 est en particulier apte à être déployée dans un aéronef, typiquement un hélicoptère, avec un équipage réduit. De manière générale, l'invention peut être déployée en utilisant les ressources habituellement présentes dans un aéronef afin de ne pas augmenter la masse des systèmes à bord, et afin de respecter les contraintes de certification de la plate-forme.

En termes de ressources, un aéronef de mission comprend différents éléments.

Un aéronef peut embarquer des équipements qui lui permettent de réaliser sa mission, comme des capteurs. Par exemple, l'aéronef peut emporter une caméra infrarouge qui servira pour des missions de recherche et sauvetage.

Il comprend également une Interface Homme-Système (IHS) 130 permettant au pilote d'interagir avec les équipements de l'aéronef, par exemple en lui affichant des informations, et en lui permettant d'entrer des informations ou instructions. L'IHS 130 peut comprendre tous types d'équipements aptes à fournir des informations au pilote. Par exemple, elle peut comprendre des écrans, mais également des haut-parleurs, alarmes, signaux lumineux d'alerte, etc. De même, elle peut comprendre différents équipements permettant au pilote d'entrer ses instructions : écrans tactiles, claviers, microphone...

Il comprend également une avionique 110, notamment un FMS 111. La norme ARINC 702 décrit les différentes fonctions des FMS. En particulier, la fonction Planification du vol FPLN, est considérée ; elle permet de saisir les éléments géographiques constituant le squelette de la route à suivre, par exemple, procédures de départ et d'arrivée, points de cheminement (en anglais, waypoint) ou voies aériennes (en anglais airways). Cette saisie peut être faite manuellement par le pilote, ou automatiquement si les informations sont reçues d'un autre équipement. Le FMS 111 détermine une trajectoire à partir d'une liste de points de passage, en tenant compte des performances de l'aéronef (i.e enveloppe de vol, vitesse maximale autorisée, rayon de courbure minimal, etc.).

A cet effet, le FMS 111 a accès à une ou plusieurs bases de données : base de données de performance de l'aéronef, d'éléments de navigation aérienne... Une fois la trajectoire calculée par le FMS 111, celle-ci peut être suivie, par exemple en transmettant les informations correspondantes à un pilote automatique, ou en affichant la trajectoire au pilote pour qu'il la suive manuellement. Le FMS permet ainsi de s'assurer que les contraintes règlementaires et de l'aéronef sont bien respectées. Si la route fournie à l'aéronef ne permet pas de déterminer une route et une trajectoire valide, celle-ci sera rejetée par l'aéronef.

L'architecture 100 comprend également un MMS 120, qui aide le pilote à la réalisation des tâches, en lui fournissant des fonctions dédiées : par exemple, des fonctions de gestion des capteurs, ou des fonctions d'aide à la décision, ou des fonctions d'automatisation de certaines tâches. A cet effet, le MMS 120 comprend un module 121 de gestion de mission. Le module de gestion de mission 121 communique avec l'IHS 130 pour interagir avec le pilote (par exemple, afficher une carte de l'environnement et les données issues de capteurs, et recevoir du pilote des instructions de mission...). Ainsi, le MMS 120 permet au pilote de disposer des informations pertinentes, de définir la mission à effectuer via le module 121 de gestion de mission, et d'envoyer des routes au FMS 111 pour calculer la trajectoire de l'aéronef.

Les différents modules présentés en figure 1 peuvent s'exécuter sur différents types de calculateurs embarqués. Selon différents modes de mise en œuvre de l'invention, les différents modules peuvent s'exécuter sur les mêmes calculateurs embarqués, ou sur des calculateurs spécifiques.

Dans un ensemble de modes de réalisation de l'invention, le MMS 120 comprend un module 122 de calcul d'une route. Comme il sera expliqué ci-dessous, le module 122 de calcul de route permet de déterminer une route entre la position de l'aéronef et un point cible, prenant en compte les performances de vol de l'aéronef, les zones à éviter et les contraintes de missions. La route calculée par le module 122 prend également en compte certaines contraintes d'entrée du FMS 111. Par exemple, une route calculée par un module 122 selon l'invention limite le nombre de points de cheminement utilisés pour décrire la trajectoire, afin de ne pas dépasser le nombre maximal de points de cheminement accessibles en entrée par le FMS 111. Ainsi, l'un des avantages de l'invention est de permettre un calcul automatique d'une route optimale, qui sera accepté par le FMS 111 et permettra de calculer une trajectoire valide.

Selon différents modes de réalisation de l'invention, le module 122 de calcul de route peut s'exécuter sur un calculateur spécifique, mais aussi sur un calculateur embarqué existant, par exemple celui sur lequel s'exécute le module 121 de gestion de mission. Dans ce dernier cas, une simple mise à jour logicielle permet de déployer l'invention sur un aéronef existant, sans modification de l'avionique.

L'architecture 100 correspond à une architecture d'avionique, dans laquelle un pilote est présent dans l'aéronef. Cependant, elle donnée à titre d'exemple uniquement, et l'invention est également applicable à d'autres types d'aéronefs, par exemple à des drones. Dans ce cas, la gestion de la mission peut s'effectuer en recevant des instructions d'un opérateur distant, ou de manière totalement automatique.

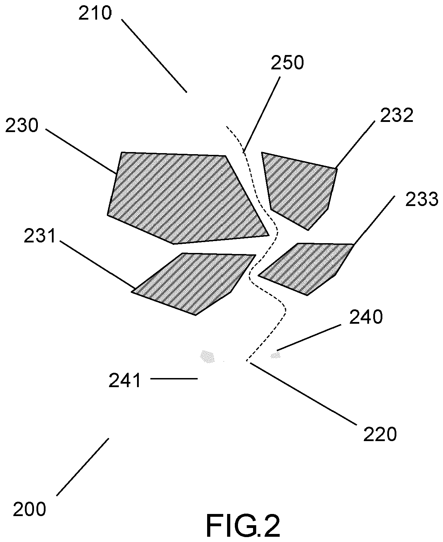

La figure 2 représente une représentation schématique d'un environnement et d'une trajectoire de mission dans un ensemble de modes de réalisation de l'invention.

On distingue généralement deux types de navigation:
- la navigation aérienne classique, dont l'objectif est de faire voler l'aéronef en respectant les contraintes de la Circulation Aérienne Générale (CAG). Ces contraintes sont énoncées par l'autorité de réglementation -respect de la réglementation, respect des couloirs aériens-, et par la compagnie aérienne - ponctualité, confort des passagers, fuel ;
- la navigation aérienne tactique, dont les contraintes sont dictées par les tâches à réaliser dans la mission, et sont issues de la mise en œuvre des capteurs et des tâches opérationnelles à réaliser.

L'invention vise à optimiser le vol de l'aéronef pour la partie tactique de la mission. Cette fonction permet de fournir aux pilotes une aide à la navigation, qui calcule et propose des routes en tenant compte des différents éléments de l'environnement de l'aéronef, comme la météo, le fuel, les capacités des capteurs, ou encore un pattern de vol spécifique à respecter. A noter que ces différentes contraintes peuvent apparaitre simultanément sur un environnement de vol.

Avantageusement, l'invention tient compte des contraintes du FMS et permet donc l'automatisation du vol de la route calculée.

L'environnement de mission comprend la position de l'aéronef 210, et la position du point cible 220. Dans l'exemple de la figure 2, la mission est une mission consistant à se poser sur un navire, par exemple pour ravitailler celui-ci en vivres, équipements médicaux, etc. Cependant, l'invention n'est pas restreinte et peut être appliquée à de nombreuses missions associées à différents types de points cibles : ravitaillement d'une station pétrolière, secours en montagne, surveillance maritime, etc.

L'environnement de mission 200 comprend des zones à éviter 230, 231, 232, 233. Par exemple, de telles zones peuvent être définies pour éviter le relief ou une météo dangereuse.

L'invention permet de définir des zones strictement inaccessibles (par exemple des zones de relief dans lequel l'aéronef ne peut en aucun cas pénétrer), et des zones qui peuvent permettre une tolérance, l'aéronef pouvant y pénétrer légèrement si cela lui permet une optimisation importante de la route (cela peut par exemple être le cas d'une zone orageuse, que l'aéronef doit éviter autant que possible, mais dans laquelle une incursion est envisageable si la route s'en trouve beaucoup raccourcie).

L'environnement de mission peut également comprendre des contraintes 240, 241 d'approche du point cible. Ces contraintes limitent la manière dont le point cible peut être approché. Dans l'exemple de la figure 2, les contraintes 240, 241 correspondent à un angle d'atterrissage optimal pour le ravitaillement du navire 220 : arrivée par l'arrière avec d'approche optimal de la zone d'atterrissage sur le navire. Des contraintes d'approche peuvent être définies dans de nombreux autres cas : par exemple, dans restrictions peuvent être définies pour l'angle et la direction d'approche d'un héliport donné ; en cas de vent fort, les angles par lesquels un point cible peut être approché peuvent également être limités pour garantir la bonne approche de l'aéronef, etc.

Dans un ensemble de modes de réalisation de l'invention, une route, ensuite convertie en trajectoire par le FMS, est calculée à partir de ces contraintes. Par exemple, la trajectoire 250 correspond à un plus court trajet de l'aéronef au point cible, évitant des zones définies, et respectant les contraintes d'approche du point cible.

L'un des objectifs de l'invention est donc de calculer une route optimale entre l'aéronef et le point cible, prenant en compte l'ensemble des contraintes d'évitement de certaines zones, d'approche de cible, ainsi que les performances de l'aéronef et les contraintes d'entrée du FMS pour le calcul de la trajectoire.

L'un des objectifs de l'invention est également de proposer un calcul rapide, permettant de recalculer la route de l'aéronef sans délai. La route de l'aéronef peut ainsi être recalculée périodiquement ou à la demande du pilote, afin de s'adapter aux évolutions de l'environnement: par exemple, la route et la trajectoire 250 peuvent être recalculées pour tenir compte des évolutions de la position du point cible 220 (i.e. déplacement d'un navire sur lequel se poser, mise à jour de la position d'un alpiniste à secourir si de nouvelles informations sont reçues...), des contraintes d'approche 240, 241 (par exemple en cas de changement de cap du navire sur lequel se poser, changement de direction du vent pour l'approche d'un héliport...), ou des zones à éviter 230, 231, 232, 233 (par exemple en cas de changement de position de zones orageuses...).

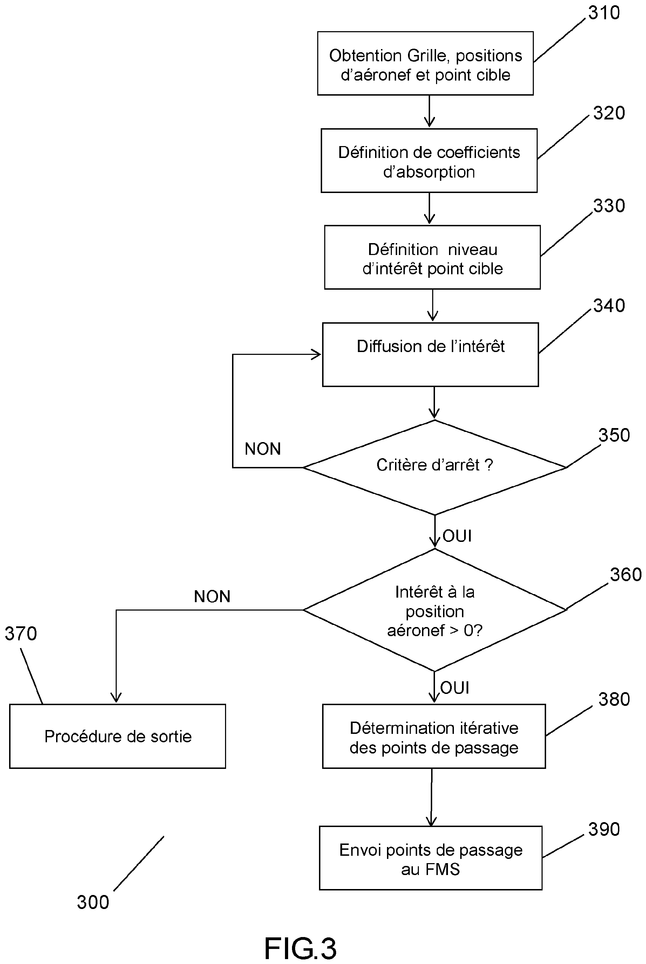

La figure 3 représente un exemple de procédé de détermination d'une route d'un aéronef selon un ensemble de modes de mise en œuvre de l'invention.

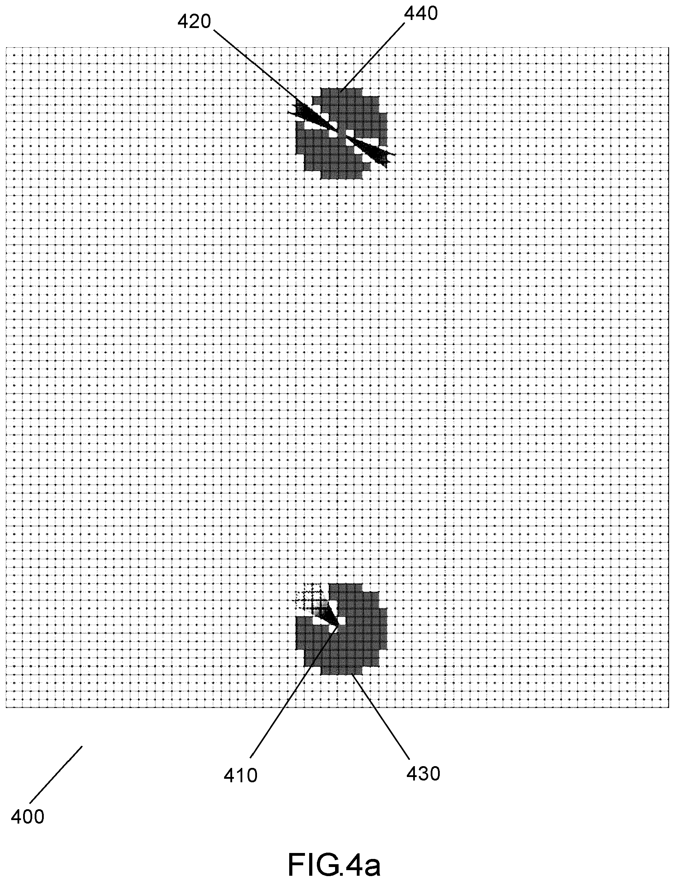

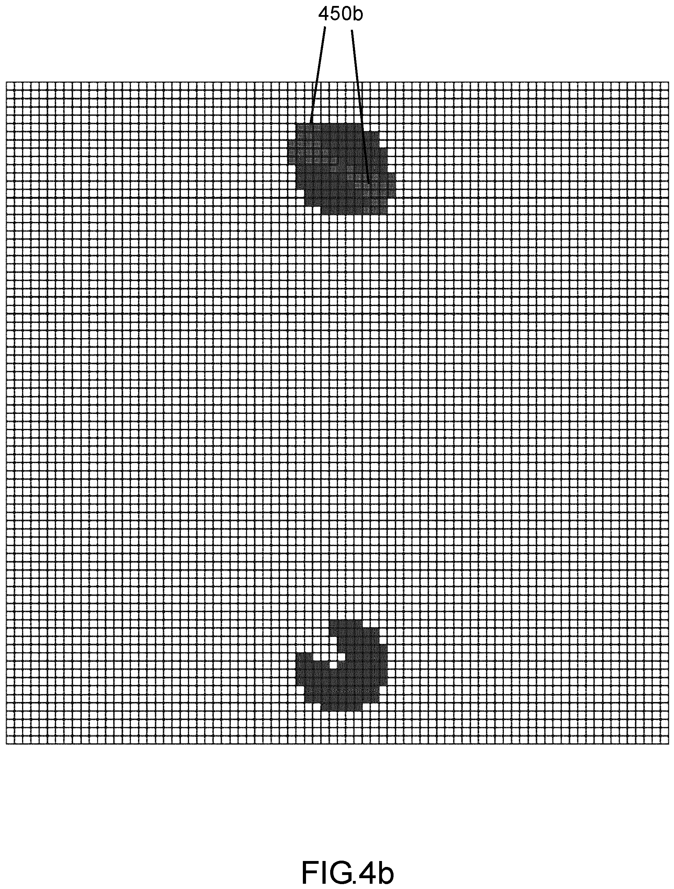

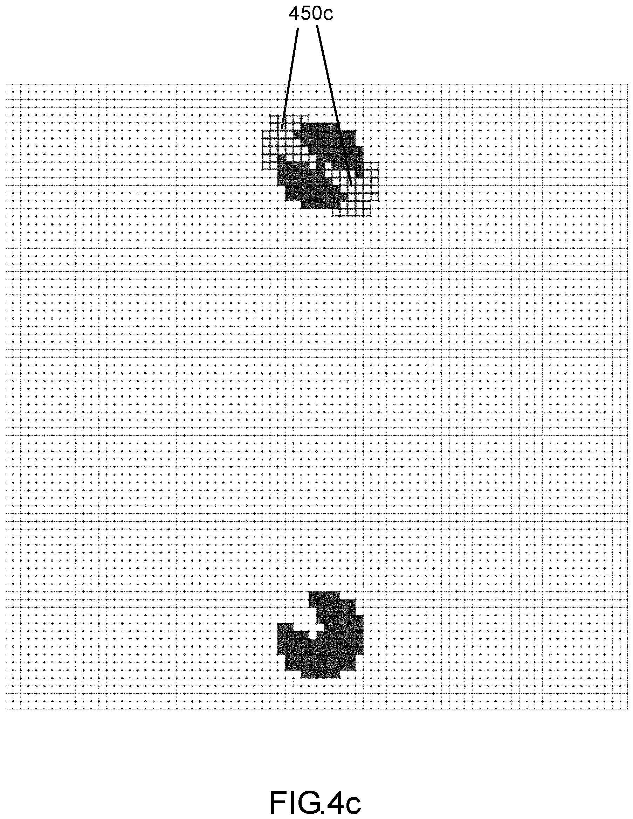

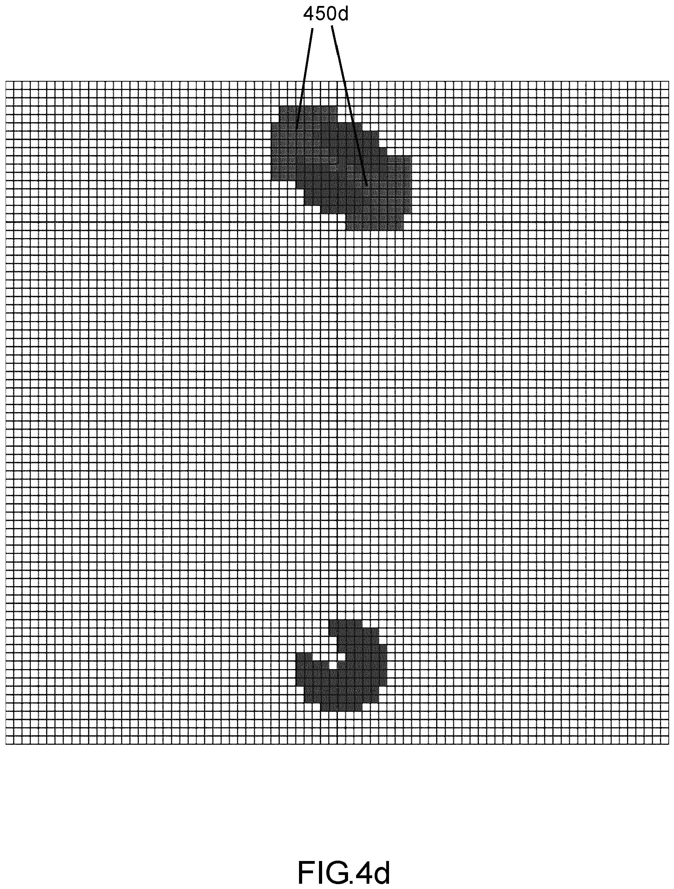

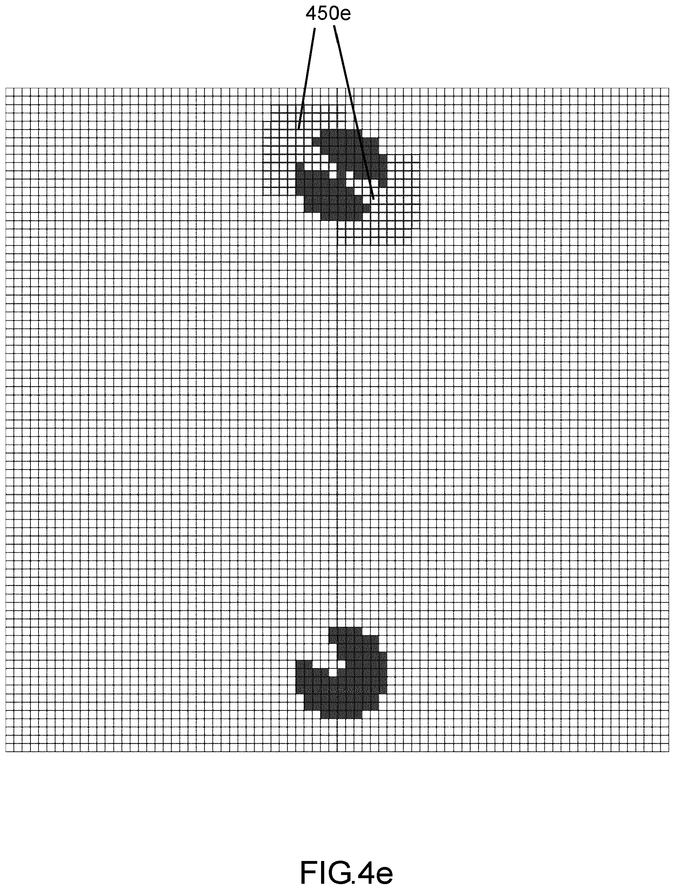

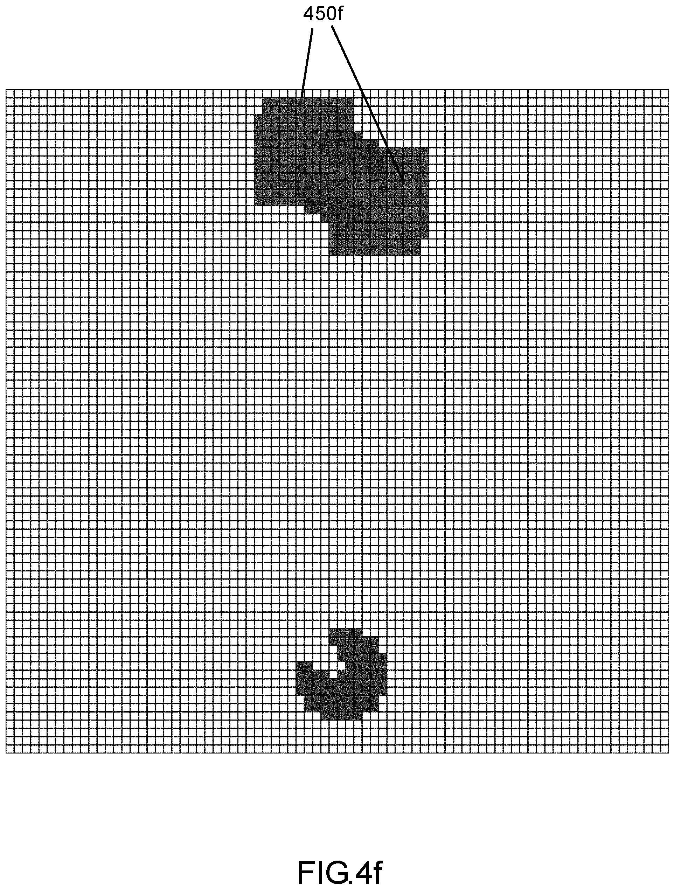

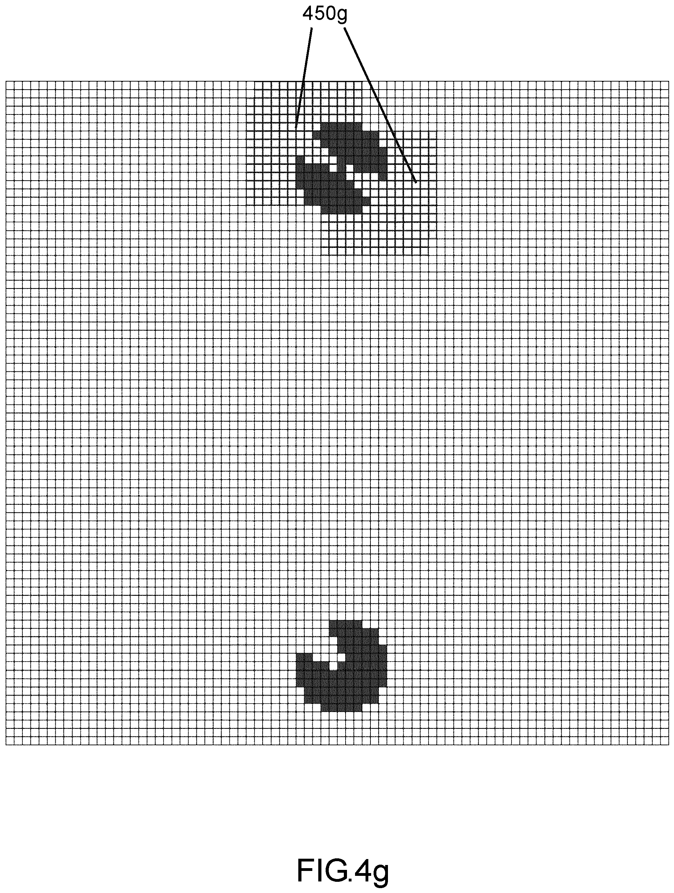

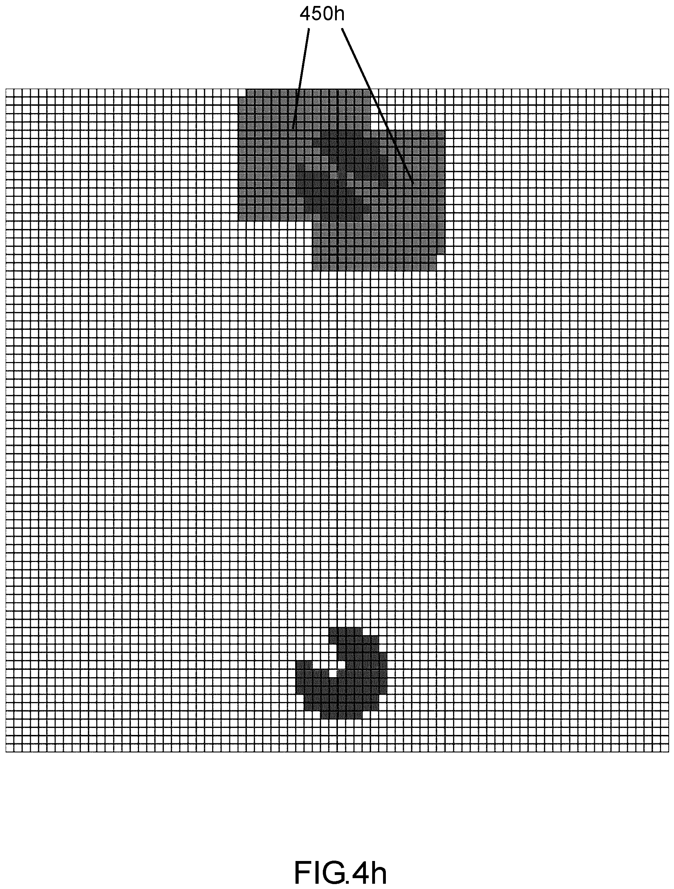

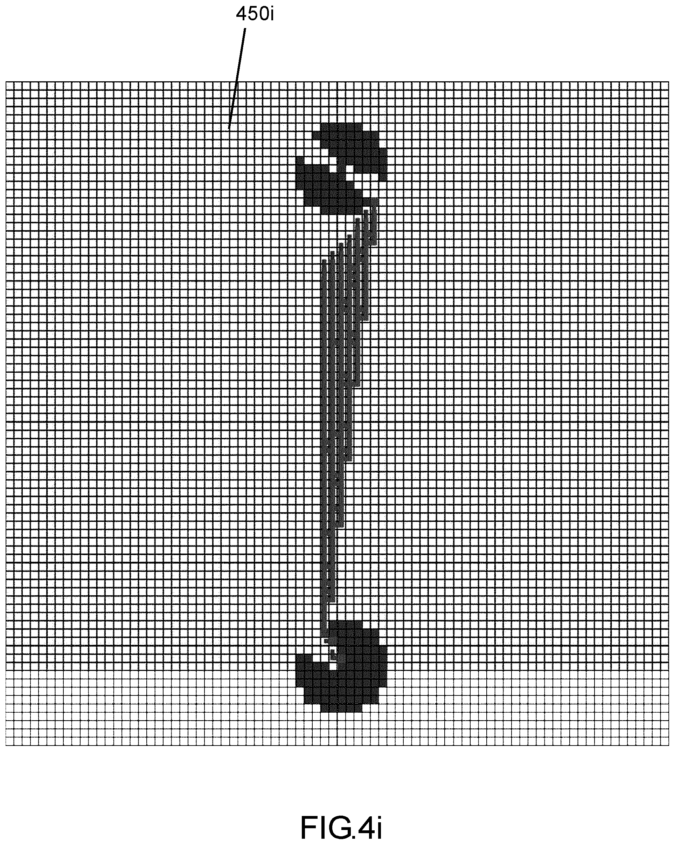

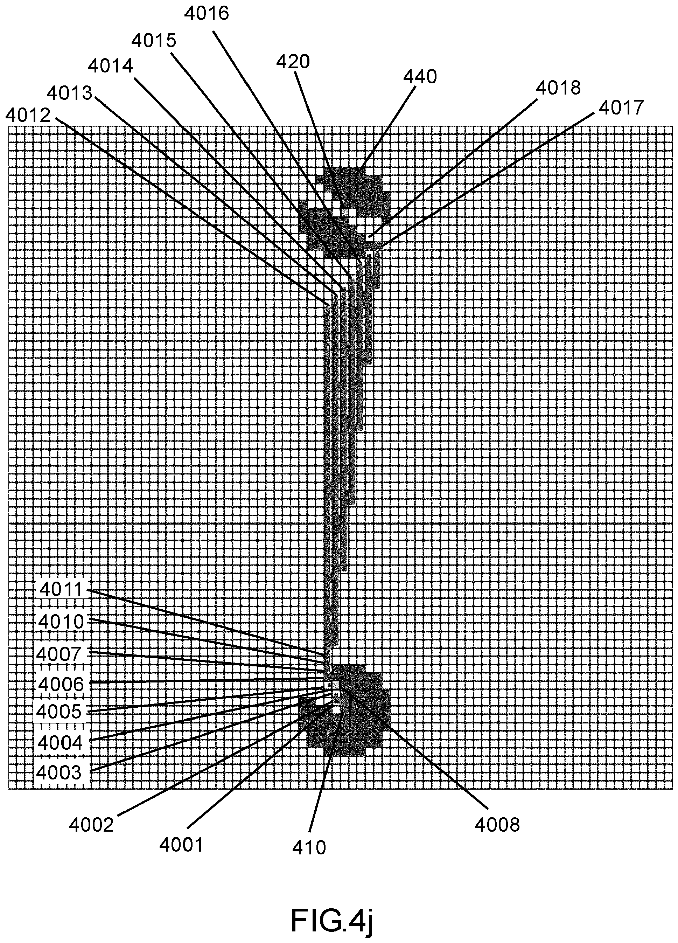

Ce procédé sera décrit en référence à ses étapes successives représentées en figure 3, les objets manipulés, étapes de calculés et résultats obtenus étant représentés en fig.4a, fig.4b, fig.4c, fig.4d, fig.4e, fig.4f, fig.4g, fig.4h, fig.4i et fig.4j.

Certains concepts de l'invention sont basés sur un algorithme dit de « diffusion collaborative » décrit par Repenning, A. (2006, October). Collaborative diffusion: programming antiobjects. In Companion to the 21st ACM SIGPLAN symposium on Object-oriented programming systems, languages, and applications (pp. 574-585). ACM. Afin de représenter l'intérêt de l'aéronef à se déplacer dans certaines cases plutôt que d'autres dans une grille, l'invention utilise les concepts suivants introduits dans cette publication :
- l'intérêt : représente l'intérêt de l'aéronef à se déplacer dans une case donnée. L'intérêt est maximal au niveau du point cible, et se diffuse de manière itérative dans les cases adjacentes ;
- les coefficients d'absorption : définissent, pour une cellule donnée d'une grille, la manière dont l'intérêt peut s'y diffuser ou non. Ainsi, une valeur d'absorption de 1 empêche totalement la diffusion de l'intérêt (et donc le passage de l'aéronef dans une cellule), alors que des valeurs nulles ou proches de 0 permettent le passage dans les cellules, le passage par une cellule donnée étant d'autant plus incitatif que le coefficient d'absorption est faible. Le coefficient d'absorption est, pour une cellule donnée, compris dans l'intervalle [0 ; 1] ;
- un agent est un élément lié à une ou plusieurs cases définissant des coefficients d'absorption et/ou un niveau d'intérêt. On parle d' « agent émetteur » pour des cellules dont le niveau d'intérêt est défini par une valeur positive restant fixe (l'intérêt se diffuse alors à partir de cette cellule), d'« agent neutre » ou d' « agent diffuseur » lorsque le passage par une cellule est autorisé (on aura alors un coefficient d'absorption faible de l'intérêt dans les cases correspondantes), et d'« agent menace » lorsque le passage par une cellule est interdit ou défavorisé (on aura alors un coefficient d'absorption élevé voir égal à 1).

Afin d'améliorer l'intelligibilité de la divulgation, celle-ci reprendra en partie la nomenclature introduite par Repenning et al.. Cependant, cette nomenclature n'est pas limitative, et l'invention pourrait être utilisée en modifiant la nomenclature et le nom de concepts manipulés.

Le procédé 300 comprend une étape d'obtention 310 d'au moins une grille 400 représentant l'environnement 200 d'une cellule position de l'aéronef 410 et d'une cellule position du point cible 420 dans la grille.

Le procédé 300 détermine la route de l'aéronef au sein d'une grille 400 représentant l'environnement de l'aéronef, c'est-à-dire l'environnement de l'aéronef dans lequel déroule la mission. La grille 400 peut prendre diverses formes, elle peut par exemple être carrée. La grille 400 est géo-référencée, c'est-à-dire que chaque cellule de la grille est associée à au moins une position géo-référencée.

La grille 400, représentée en fig.4a à fig.4j, peut être géo-référencée de différentes manières. Par exemple, chaque ligne peut représenter une latitude, et chaque colonne une longitude, avec un écart de latitude/longitude constant entre les lignes et les colonnes.

Pour des raisons des raisons de mise en forme, les fig.4a à fig.4j représentent l'ensemble des valeurs manipulées sur une grille unique. Cependant, dans un ensemble de modes de réalisation de l'invention, un ensemble de grille est créé, avec une grille par type de donnée manipulée. Dans ce cas, les cellules correspondantes des grilles correspondent aux valeurs des différents types de données manipulées, en un point donné. On peut ainsi créer trois grilles comprenant respectivement les coordonnées géographiques des coins des cellules, les coefficients d'absorption et les niveaux d'intérêt pour chaque cellule, ou une grille unique comprenant l'ensemble de ces données, par exemple avec un vecteur de données par cellule. Alternativement, une grille peut être définie avec pour chaque cellule un type d'agent (neutre, émetteur ou menace) et un paramètre associé. L'invention n'est pas restreinte à une manière particulière de représenter les données, pourvu que, si les données sont représentées dans plusieurs grilles, il existe une correspondance entre les cellules des grilles. Afin de simplifier la lecture de cette divulgation, on parlera par la suite de « la grille » ou de « l'au moins une grille » même si les coordonnées géographiques, les niveaux d'intérêt et les coefficients d'absorption sont placés dans trois grilles différentes.

Dans un ensemble de modes de réalisation de l'invention, chaque cellule de la grille 400 de coordonnées stocke les coordonnées (latitude et longitude) d'un coin de la cellule, par exemple le coin supérieur gauche. Ainsi, en ajoutant une ligne et une colonne par rapport au nombre de cellules désiré pour la grille, chacun des quatre coins d'une cellule de la grille est associée à des coordonnées géographiques. Il est alors possible de déterminer par interpolation linéaire des coordonnées des quatre coins (en supposant que la Terre peut être considérée comme localement plate au sein d'une cellule), les coordonnées géographiques de tout point au sein même de la cellule.

Dans un ensemble de modes de réalisation de l'invention, la grille 400 est construite selon une loxodromie, c'est-à-dire que l'association entre les cellules de la grille et les coordonnées géographiques prennent en compte la courbure de la Terre, afin qu'une ligne droite sur la grille corresponde à un cap constant de l'aéronef. Comme il sera expliqué plus loin dans la description, la méthode 300 détermine la route de l'aéronef comme une succession de segments au sein de la grille 400. Utiliser une loxodromie pour construire la grille permet donc d'intégrer directement la courbure de la Terre dans le calcul de la route : une trajectoire la plus courte sur la grille sera également la trajectoire réelle la plus courte de l'aéronef. De plus, une ligne droite dans la grille correspondra à un plus court chemin entre deux points, prenant en compte la courbure de la Terre.

Dans un ensemble de modes de réalisation de l'invention, la grille 400 a une taille fixe, et les cellules position de l'aéronef 410 et position du point cible 420 ont un emplacement fixe au sein de la grille. Il est alors possible de déduire, à partir des positions géographiques et emplacement dans la grille de l'aéronef et du point cible, les coordonnées géographiques de chacune des cellules de la grille 400.

Utiliser une grille de taille fixe permet de borner le temps de calcul, quelle que soit la distance. En effet, il apparaîtra de la suite de la description que le nombre d'opérations à effectuer est substantiellement proportionnel au nombre de cellules. Ainsi, utiliser une grille de taille fixe permet de fixer le nombre de cellules, et donc le temps de calcul sur une plate-forme de calcul donnée. Le nombre de cellules de la grille peut donc être prédéfini pour garantir un calcul de route en temps réel.

De plus, ceci permet d'augmenter la précision du calcul de route au fur et à mesure que l'aéronef s'approche de la cible. En effet, plus les positions de l'aéronef et de sa cible sont proches, plus la résolution des cellules, à taille de grille constante, sera élevée. L'invention permet donc de recalculer au fur et à mesure de l'avancement de l'aéronef une route de plus en plus précise.

La demanderesse a remarqué qu'une taille de grille de 100x100 cellules utiles fournit un bon compromis entre une résolution suffisante de calcul de la trajectoire, et une complexité de calcul limitée (cette taille correspond à une taille de 101x101 pour une grille de coordonnées, en prenant la convention selon laquelle chaque cellule de la grille stocke les coordonnées géographiques d'un des coins de la cellule, et qu'une ligne et une colonne doivent être ajoutées pour disposer de toutes les coordonnées). Dans les exemples suivants, des grilles carrées de 100x100 cases utiles seront considérées pour les grilles stockant les niveaux d'intérêt et coefficients d'absorption, correspondant à 101x101 cases pour la grille contenant les coordonnées des coins des cellules), et les cellules de la grille sont numérotées de 0 à 99 sur un axe horizontal x et une axe vertical y. Cependant, ces dimensions et forme de grille sont données à titre d'exemple uniquement, et d'autres formes et tailles de grille peuvent être utilisés selon différents modes de réalisation de l'invention.

Dans un mode de réalisation de l'invention, l'aéronef et le point cible sont respectivement situées au milieu bas et milieu haut de la grille. Par exemple, la grille 400 peut être définie de la manière suivante :
- on détermine la distance entre l'aéronef et la cible ;
- on ajoute 20% à cette distance pour obtenir la taille d'un côté de la grille c ;
- on définit les positions de l'aéronef et du point cible sur la grille : x_aeronef=9, y_aeronef=50 et la cible est en x_cible=90, y_cible=50. Comme montré en fig. 4a ceci permet de conserver le maximum de cellules possibles pour la détermination de la route optimale. La grille n'a donc a priori pas d'orientation prédéfinie. Elle ne sera en particulier pas nécessairement organisée selon un axe vertical Nord-Sud et un axe horizontal Est-Ouest ;
- on calcule la taille d'un segment de case en multipliant la distance entre l'aéronef et la position du point cible par un coefficient représentatif de la marge prise autour des positions de l'aéronef et du point cible (par exemple 1,2 dans l'exemple précédent pour refléter le fait que l'aéronef et la cible sont respectivement situées aux cases d'indice vertical 9 et 90 sur 100), et en divisant par le nombre de case par côté (par exemple 100) ;
- on calcule la position de l'origine de la grille en fonction de la position du porteur et de l'orientation porteur-cible avec une loxodromie :
   o on part de l'aéronef et on se déplace à une distance équivalente à la marge (10% de la taille) avec un angle égal à l'orientation porteur-cible + pi ;
   o on part ensuite à une distance de la moitié de la zone de travail à un angle égal à l'orientation porteur-cible - pi/2.

D'autres modes d'obtention de la grille et des positions de l'aéronef et de la cible sont également possibles. Par exemple, la grille peut correspondre à un théâtre d'opération élargi correspondant à des cellules de positions prédéfinies, et les cellules correspondant aux positions de l'aéronef et de la cible sont sélectionnées au sein de cette grille.

La méthode 300 comprend ensuite une étape 320 de définition, pour un ensemble de cellules de l'au moins une grille 400, de coefficients d'absorption définissant la possibilité d'une trajectoire de l'aéronef de traverser les cellules, en fonction d'un ensemble de zones à éviter, de contraintes d'initialisation de trajectoire et de contraintes d'approche. Cette étape consiste à définir, pour chaque cellule potentiellement traversable par l'aéronef, un coefficient d'absorption qui, en fonction de sa valeur, favorisera plus ou moins le passage de l'aéronef par une cellule donnée : les coefficients d'absorption peuvent par exemple être compris dans l'intervalle [0 ; 1] : un coefficient 1 empêche totalement tout passage de l'aéronef par une cellule donnée ; plus le coefficient est faible plus l'aéronef pourra emprunter la cellule correspondante. Les coefficients d'absorption présentent l'avantage de fournir une solution unique permettant de définir le comportement à adopter par l'aéronef en fonction de contraintes extrêmement variées (évitement d'obstacles, angle d'attaque sur la cible, etc.). Les coefficients d'absorption peuvent être définis explicitement pour chaque cellule, ou en définissant pour chaque cellule un type d'agent, avec le cas échéant un paramètre associé (dans ce cas, un agent neutre correspondra à un coefficient d'absorption nul, et un agent menace à un coefficient d'absorption non nul).

Dans un ensemble de modes de réalisation de l'invention, la définition de coefficients d'absorption comprend la définition, autour de la position l'aéronef 410, d'une ellipse de cellules 430 présentant un coefficient d'absorption empêchant la diffusion de l'intérêt dans la cellule (c'est-à-dire, un coefficient égal à 1 selon la nomenclature définie précédemment), incisée dans le sens du déplacement au décollage de l'aéronef selon un angle de courbure maximal de l'aéronef.

Ceci permet à la route calculée de partir dans le sens de vol de l'aéronef : la trajectoire calculée en prenant en compte cette contrainte démarrera nécessairement dans le sens de déplacement de l'aéronef, et, si celui-ci doit faire demi-tour immédiatement, le demi-tour respectera le rayon de courbure maximal de l'aéronef.

Dans un ensemble de modes de réalisation de l'invention, la définition de coefficients d'absorption comprend la définition, autour de la position du point cible 420, d'une ellipse de cellules 440 présentant un coefficient d'absorption supérieur ou égal à un seuil prédéfini, incisée dans le sens d'au moins un secteur d'incidence pour l'approche du point cible.

Le seuil prédéfini permet, selon les cas, soit d'interdire totalement à l'aéronef la traversée des cellules de l'ellipse, soit de la défavoriser pour favoriser des trajectoires passant par les incisions. Ici, les incisions correspondent à un secteur d'incidence souhaité pour l'approche du point cible. Par exemple, les incisions peuvent être déterminées par rapport à des conditions météo : elles peuvent correspondre à un sens d'arrivée souhaité sous ou contre le vent à un point donné. Elles peuvent également correspondre à une incidence souhaitée arrivée face à une piste d'atterrissage. Dans tous les cas, ceci permet à l'aéronef, de s'approcher du point cible prioritairement selon les angles d'incidence souhaités.

Selon différents modes de réalisation de l'invention, la définition de coefficients d'absorption 320 comprend la définition, pour un ensemble de cellules dont l'un des coins au moins est situé dans une menace, d'un coefficient d'absorption supérieur ou égal à un seuil prédéfini.

Dans un ensemble de modes de réalisation de l'invention, différentes zones à éviter peuvent être définies. Il peut s'agir de menaces météorologiques (orages...), de relief, de zones autour d'autres aéronefs volant sensiblement à la même altitude, ou plus généralement de toute zone présentant un danger pour l'aéronef.

Ces zones à éviter peuvent être représentées de différentes manières : il peut par exemple s'agir d'ellipses, de carrés, ou de formes plus complexes. L'homme de l'art pourra sans effort envisager les formes adaptées à un type donné de contraintes, pour autant que cette forme lui permette de déterminer si les coordonnées géographiques associées à un coin donné d'une cellule sont comprises dedans.

Selon différents modes de réalisation de l'invention, différents coefficients d'absorption peuvent être associés à chacune de ces zones à éviter. Par exemple, une menace de type relief peut être associée à un coefficient d'absorption de 1, car l'aéronef ne devra en aucun cas entre en collision avec un relief dangereux, alors qu'un coefficient inférieur à 1 pourra être utilisé pour une zone de faibles turbulences, que l'aéronef pourra pénétrer légèrement si nécessaire. L'homme de l'art pourra identifier, en fonction des contraintes de la zone, le coefficient d'absorption le plus adapté.

Dans un ensemble de modes de réalisation de l'invention, une marge peut être appliquée aux zones à éviter préalablement à la vérification des cellules associées à la menace.

Dans un ensemble de modes de réalisation de l'invention, la méthode prend en entrée un coefficient, dit coefficient d'agressivité, indiquant à quel point l'aéronef peut le cas échéant pénétrer dans certaines des zones à éviter. Plus le coefficient d'agressivité est élevé, plus la marge et le coefficient d'absorption associés aux zones à éviter seront faibles. Selon différents modes de réalisation de l'invention, le coefficient d'agressivité peut être appliqué à tout ou partie des zones à éviter. Par exemple, il peut être appliqué aux menaces de type météo, mais pas aux menaces de type relief.

Dans un ensemble de modes de réalisation de l'invention, toutes les cellules pour lesquelles n'a pas été défini un coefficient d'absorption indiquant que le l'aéronef doit éviter ladite cellule (par exemple, comme indiqué ci-dessus, pour respecter l'orientation initiale de l'aéronef, l'approche de la cible, ou pour éviter des zones) peuvent être associé à un coefficient d'absorption favorisant le passage de l'aéronef par une cellule, par exemple un coefficient d'absorption prédéfini inférieur à ceux utilisés pour marquer les cellules de menace, ou les ellipses autour des points de départ et d'arrivée. Par exemple, un coefficient d'absorption de 0 peut être utilisé. On parle alors pour ces cellules d' « agent neutre » : ces cellules permettent de diffuser l'intérêt sans absorption.

L'invention comprend ensuite une étape 330 de définition pour au moins une cellule autour du point cible, d'un niveau d'intérêt égal à un seuil d'intérêt prédéfini. La cellule jouera par la suite le rôle d'« agent émetteur », c'est-à-dire que l'intérêt se propage à partir de cette cellule, sans que le niveau d'intérêt de la cellule représentant l'agent émetteur ne varie. Ainsi, ces cellules permettent de diffuser progressivement l'intérêt. Comme il sera expliqué ci-dessous, l'aéronef aura tendance à suivre une trajectoire remontant vers un intérêt de plus en plus fort jusqu'au point cible.

Selon différents modes de réalisation de l'invention, la définition du ou des « agents émetteurs » peut se faire de différentes manières. Par exemple, seule la cellule position du point cible 420 peut être un agent émetteur.

Dans les modes de réalisation dans lesquels une ellipse de cellules est définie autour du point cible, avec une incision dans le sens d'au moins un secteur d'incidence pour l'approche de point cible, un agent émetteur peut être placé dans chacune des cellules de l'incision, afin de favoriser encore plus une trajectoire s'approchant du point cible par l'incision.

Selon différents modes de réalisation de l'invention, différentes valeurs d'intérêt peuvent être affectées aux agents émetteurs. Par exemple, une valeur égale à la largeur de la grille, par exemple 100, peut être affectée aux agents émetteurs.

Le niveau d'intérêt des cellules ne contenant pas d'agent émetteur est initialisé à une valeur plus faible, par exemple 0.

La méthode 300 comprend ensuite des étapes itératives de diffusion de l'intérêt 340.

Chaque itération de diffusion de l'intérêt consiste à parcourir l'ensemble des cellules, et pour chaque cellule autre que les agents émetteurs (c'est-à-dire les cellules autres que le point cible, ou les cellules d'une incision dans une ellipse autour du point cible), on définit son intérêt comme une moyenne pondérée des valeurs d'intérêt des cellules de son voisinage.

Différents voisinages, et pondérations peuvent être envisagés. Par exemple, un voisinage de Moore ou de Von Neumann peut être envisagé. Dans un ensemble de modes de réalisation de l'invention, la valeur d'intérêt peut être définie comme la moyenne des cellules du voisinage de Moore de 1^{e} niveau d'une cellule, pondérée par l'inverse de la distance euclidienne entre la cellule courante et chacune des cellules du voisinage.

Ceci permet d'effectuer une diffusion de l'intérêt, c'est-à-dire que le niveau d'intérêt des cellules, qui demeure fixe pour les agents émetteurs situés proche du point cible, se diffuse de proche en proche, en s'atténuant au fur et à mesure que l'on s'éloigne du point cible.

Dans le cas de cellule de type « agents de menaces », c'est-à-dire de cellules représentant un obstacle, ou une ellipse autour de la position de l'aéronef ou de la position cible, on applique le coefficient d'absorption correspondant, en multipliant la valeur obtenue par la moyenne pondérée par une valeur (1 - c_{abs}), avec c_{abs} le coefficient d'absorption.

Si le coefficient d'absorption est égal à 1, le niveau d'intérêt de la cellule restera égal à 0. En revanche, c'il est compris entre 0 et 1, le passage par la cellule diminuera le niveau d'intérêt de manière plus importante que le passage par une cellule de type agent neutre, mais n'annulera pas complètement l'intérêt du passage par ladite cellule. Ainsi, si un passage par une cellule de type agent de menace affecté d'un coefficient d'absorption modéré permet un trajet beaucoup plus court que le trajet autorisé par les seules cellules agent neutre, cette cellule pourra être retenue pour la construction de la route de l'aéronef. La définition des coefficients d'absorption permet donc de définir un équilibre entre la recherche de la route la plus courte et l'évitement des zones, en ajustant pour chaque zone un niveau d'absorption qui permet d'envisager le cas échéant une incursion limitée dans celle-ci plutôt qu'un évitement total, si cela permet un gain suffisant en termes de distance parcourue. Ce principe permet donc une définition très flexible des zones que l'aéronef est incité ou non à traverser.

Dans un ensemble de modes de réalisation de l'invention, si l'on numérote les itérations par un index n=1,2,3, ... à chaque itération d'index n, les valeurs d'intérêt précédemment obtenues à l'itération n-1 sont stockées, et, pour la diffusion de l'intérêt 340, les moyennes pondérées sont effectuées sur les valeurs d'intérêt stockées à l'issue de l'itération n-1, afin d'éviter un biais dans la diffusion (c'est-à-dire éviter qu'une valeur d'intérêt à l'itération n soit calculée comme une moyenne pondérée des valeurs d'intérêts de cellules environnants, issue à la fois de l'itération n et n-1). Ceci peut se faire par exemple en dupliquant la grille de valeurs d'intérêt avant la diffusion, ou en stockant les valeurs d'intérêt à l'itération n dans une grille vierge, qui viendra remplacer la grille courante une fois l'itération terminée.

Plusieurs itérations de diffusion de l'intérêt 340 sont effectuées, jusqu'à la validation 350 d'un critère d'arrêt.

Le critère d'arrêt permet de déterminer le moment où le nombre d'itérations est considéré comme suffisant.

Dans un ensemble de modes de réalisation de l'invention, le critère d'arrêt est validé, lorsque l'intérêt au niveau de la cellule position de l'aéronef 410 est supérieur à 0. Ceci signifie en effet qu'un chemin a été trouvé jusqu'à l'aéronef. De plus, on peut considérer que le premier chemin trouvé aura de fortes probabilités d'être le plus court et donc le meilleur. D'autres critères relatifs à l'intérêt au niveau de l'aéronef sont possibles : par exemple le critère d'arrêt peut être validé au bout d'un nombre prédéfini d'itérations après que l'intérêt au niveau de la position de l'aéronef soit devenu non nul, lorsque l'intérêt au niveau de l'aéronef est inférieur à un seuil prédéfini, et que la différence d'intérêt entre deux itérations devient suffisamment faible. Ainsi, tout critère d'arrêt reflétant le fait qu'un chemin satisfaisant a été trouvé entre l'aéronef et le point cible peut être utilisé.

Dans un ensemble de modes de réalisation de l'invention, le critère d'arrêt est validé si un nombre maximal d'itérations prédéfini est atteint. Ce nombre peut être par exemple égal à 10 fois le nombre de cellules du côté de la grille, soit 1000 si la grille comporte 100 cellules. Ce nombre d'itérations maximal peut ainsi être choisi pour que, si ce nombre est atteint et que le niveau d'intérêt à la cellule position de l'aéronef est toujours 0 (c'est-à-dire, si aucun chemin n'a été identifié entre l'aéronef et le point cible), il est très probable qu'aucun chemin n'existe entre l'aéronef et la cible.

Ces conditions peuvent être combinées: ainsi, le critère d'arrêt peut être réalisé si niveau d'intérêt de la cellule position de l'aéronef 410 est supérieur à 0, ou si le nombre d'itérations effectuées est inférieur ou égal au un seuil maximal d'itérations prédéfini.

La méthode 300 comprend ensuite une vérification 360 de si l'intérêt à la cellule position de l'aéronef 410 est nul. Comme indiqué plus haut, ceci signifie qu'aucun chemin entre l'aéronef et le point cible n'a été trouvé compte tenu des contraintes posées.

Dans ce cas, une procédure de sortie 370 est activée. Cette procédure de sortie peut être de différents ordres. Elle peut par exemple comprendre un message d'alerte visuel ou sonore. Elle peut également comprendre, via l'interface de gestion de mission 121, et l'IHM 130, une invitation au pilote à modifier les paramètres de calcul. En effet, des paramètres de calcul différents peuvent permettre de trouver un chemin, par exemple en diminuant les coefficients d'absorption des menaces, ou en augmentant le niveau d'agressivité dans les modes de réalisation prenant en compte ce paramètre. La procédure de sortie 370 permet ainsi d'avertir le pilote de l'impossibilité de calculer une route avec les paramètres courants, et lui permet de prendre les mesures appropriées pour corriger ce problème.

Les fig.4b, fig.4c, fig.4d, fig.4e, fig.4f, fig.4g, fig.4h et fig.4i représentent la diffusion de l'intérêt dans la situation représentée par la fig.4a. Comme exposé ci-dessus, l'intérêt se diffuse, à chaque itération, et pour chaque cellule, comme une somme pondérée des intérêts des cellules d'un voisinage immédiat à l'itération précédente. Les fig.4b, fig.4c, fig.4d, fig.4e, fig.4f, fig.4g et fig.4h montrent, dans l'ordre, la diffusion de l'intérêt lors des 7 premières itérations de diffusion. Les zones 450b, 450c, 450d, 450e, 450f, 450g et 450h correspondent respectivement aux cellules ayant un intérêt non nul à chaque itération.

La fig.4i représente la diffusion de l'intérêt au moment où l'intérêt atteint la position de l'aéronef. Les cellules pour lesquelles l'intérêt est non nul sont notées 450i. Dans cet exemple, l'intérêt a atteint la position 410 de l'aéronef, le critère d'arrêt est alors validé à l'étape 350, et les itérations de diffusion sont stoppées.

Une fois que l'intérêt a atteint la position 410 de l'aéronef, il est possible de déterminer un plus court chemin entre l'aéronef et la position cible. Dans un ensemble de modes de réalisation de l'invention, ce plus court chemin est déterminé à l'aide d'une méthode dite de « lancer de rayon ». La zone 460 correspond à la zone affectée par le lancer de rayon, qui sera décrit plus en détail en référence à la fig.4j.

Dans le cas où la vérification 360 de l'intérêt à la position de l'aéronef est positive, c'est-à-dire si la diffusion de l'intérêt a pu atteindre la position de l'aéronef, une étape 380 de détermination itérative des points de cheminement est activée.

Cette étape consiste à déterminer une liste de points de cheminement définis par des cellules ayant un niveau d'intérêt le plus favorable pour lesquels une ligne droite tracée entre deux points successifs de la liste ne traverse pas de cellule dont le coefficient d'absorption n'autorisant pas la traversée de la cellule par l'aéronef, c'est-à-dire une liste, parmi les cellules de la zone 460, de points de cheminement qui permettent de rejoindre le point cible sans intercepter de cellule de menace.

La fig.4j présente un exemple de détermination de points de cheminement, à l'aide d'une méthode dite de « lancer de rayon ». Cette méthode consiste à construire itérativement une liste de points de cheminement, chaque point de cheminement étant identifié par une cellule. Dans l'exemple de la fig.4j la liste est construite à partir de la position de l'aéronef, mais il serait tout à fait possible d'inverser la méthode et de construire la liste de points de cheminement à partir de la position cible.

La liste de points de cheminement est initialisée avec la position 410 de l'aéronef. A ce stade, la liste de points de cheminement comprend donc uniquement la cellule position de l'aéronef : [410].

La cellule suivante à rajouter à la liste sera choisie en déterminant itérativement des cellules candidates de l'environnement de la cellule courant présentant l'intérêt le plus fort, c'est-à-dire des cellules situées sur le « meilleur » chemin : le plus court et/ou celui qui n'intercepte pas de cellule menace. Dans l'exemple de la fig.4j, un voisinage de Von Neuman sera utilisé, mais, dans d'autres modes de réalisation de l'invention, d'autres types de voisinages peuvent être utilisés.

Une première cellule candidate 4001 est identifiée : il s'agit d'une cellule de l'environnement de Von Neuman de la cellule 410 ayant l'intérêt le plus fort. Cette cellule étant adjacente à la cellule 410, la question de l'interception d'une cellule menace ne se pose pas encore.

Une deuxième cellule candidate 4002 est sélectionnée, comme cellule du voisinage de Von Neuman de la 1^{e} cellule candidate 4001 présentant l'intérêt le plus fort. Ensuite, une ligne virtuelle est tracée entre la deuxième cellule candidate 4002 et la dernière cellule de la liste de points de cheminement (donc la cellule 410), pour vérifier si une cellule de menace est interceptée. Tant que ce n'est pas le cas, la deuxième cellule candidate devient la première, et une nouvelle deuxième cellule candidate est choisie comme étant la cellule de le voisinage de Von Neumann de la 1^{e} présentant l'intérêt le plus fort, puis une ligne virtuelle est tracée jusqu'à la cellule 410 pour vérifier la présence de cellule de menaces, etc.

Ainsi, itérativement, les cellules candidates 4003, 4004, 4005, 4006 sont successivement testées, sans que les lignes entre chacune de ces cellules et la cellule 410 n'interceptent de cellule de menace.

Puis, la cellule 4007, qui est la cellule du voisinage de Von Neumann de la cellule 4006 présentant l'intérêt le plus fort est testée. Cependant, dans ce cas, la ligne droite entre la cellule 4007 et la cellule 410 intercepte des cellules de menaces, par exemple la cellule 4008. Lorsqu'une telle configuration est rencontrée, c'est la cellule candidate précédente, ici la cellule 4006, qui est choisie comme prochain point de cheminement. La liste des points de cheminement est donc à ce stade définie par les cellules [410, 4006]. Cette méthode permet donc de définir, entre chaque point de cheminement, le segment de vol le plus grand possible qui n'intercepte pas de cellule de menaces, en retenant la dernière cellule candidate pour laquelle la route n'interceptera pas de cellule de menaces. Ceci permet ainsi d'obtenir une route optimale, avec un nombre de points de cheminements et de segments aussi faible que possible, ce qui permet de respecter le nombre maximal de points de cheminement que le FMS attend en entrée.

De nouvelles cellules candidates sont ensuite testées pour le prochain point de cheminement, à partir du dernier point ajouté dans la liste, c'est-à-dire la cellule 4006. Les cellules testées sont dans un premier temps les cellules 4007, 4010, 4011... jusqu'à la cellule 4012. A chaque fois, le segment entre les cellules 4006, et 4007, 4010, 4011... 4012 d'une part, et la cellule 4006 d'autre part, n'intercepte pas de cellule de menace. A ce stade, les cellules candidates sont sélectionnées sur la même colonne, car il s'agit du chemin pour lequel l'intérêt associé à chaque cellule est maximum. En revanche, après la cellule 4012, ce sera la cellule 4013 qui sera retenue comme cellule candidate. En effet, elle est associée à un niveau d'intérêt plus fort que la cellule 4014, qui est située plus loin des agents diffuseurs situées dans les incisions de l'ellipse 440, et a donc bénéficié d'une diffusion moins forte de l'intérêt. Ensuite, les cellules candidates 4015, 4016... 4017 sont testées. Ici encore, aucun des segments entre ces cellules et la cellule 4006 n'intercepte d'agent menace.

Une fois la cellule candidate 4017 testée, le voisinage de Von Neuman de la cellule 4017 est évalué pour déterminer la prochaine cellule candidate. Cependant, ce voisinage comprend au moins un agent émetteur, la cellule 4018 située dans l'incision de l'ellipse 440. Ceci signifie que la zone cible a été atteinte. La cellule 4017 est donc ajoutée à la liste des candidats, ainsi que la cellule cible 420. La liste des points de cheminement à envoyer au FMS est donc composée des cellules suivantes : [410 ; 4006 ; 4017 ; 420]. Cette liste comprend donc bien le nombre de points de cheminement minimal permettant de voler une trajectoire aussi courte que possible entre la position de l'aéronef et la position cible, tout en respectant les contraintes fixées, en l'occurrence les angles de départ de l'aéronef, et d'arrivée sur le point cible.

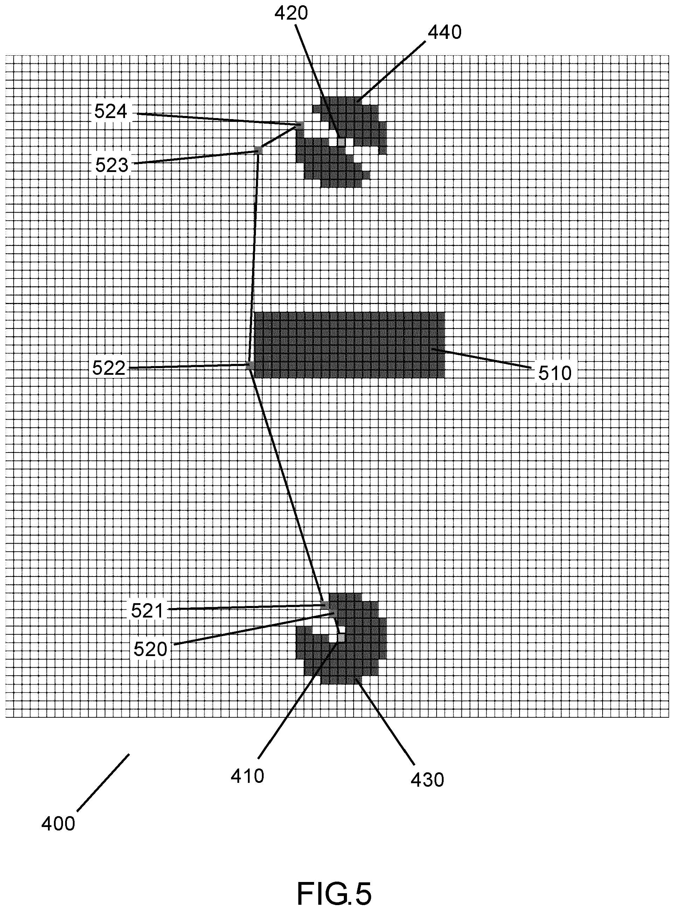

La figure 5 représente un exemple de route d'aéronef calculée dans une mise en œuvre de l'invention.

La situation est ici similaire à celle de la fig.4a, sauf qu'un obstacle 510 a été ajouté. Cet obstacle est associé à des coefficients de diffusion nuls. Il est donc strictement impossible pour l'intérêt de s'y diffuser, et pour l'aéronef de le traverser. Dans cet exemple, la méthode 300 sélectionnera les points de cheminement et en extraira la liste suivante : [410, 520, 521, 522, 523, 524, 420]. Il convient de noter qu'ici l'approche du point cible se fait par l'incision de gauche et non l'incision de droite. En effet, la forme de l'obstacle 510 a rendu la diffusion de l'intérêt plus longue par la droite pour le contourner. L'intérêt s'est donc diffusé plus rapidement sur les cellules à gauche de l'obstacle, ce qui a conduit à choisir des points de cheminement contournant l'obstacle par la gauche.

Cet exemple démontre la capacité de l'invention à modéliser des contraintes correspondant à différentes situations opérationnelles, et à sélectionner le chemin le plus court pour aller de la position de l'aéronef au point cible dans tous les cas.

Une fois la liste des points de cheminements déterminée à l'étape 380, la méthode 300 comprend une étape 390 d'envoi des points de cheminement au FMS.

A l'issue de l'étape 380 une route optimale est identifiée, sous la forme d'une liste de cellules. Pour l'envoi au FMS, les points de cheminement peuvent être convertis des coordonnées de cellules vers des coordonnées géo-référencées acceptées par le FMS.

Selon différents modes de réalisation de l'invention, chaque cellule peut être convertie en une position géo-référencée d'un point dans la cellule. Par exemple, dans des modes de réalisation dans lesquels la latitude et la longitude de chaque coin d'une cellule sont connues, une cellule peut être convertie en position géo référencée en effectuant une interpolation linéaire des coordonnées des coins de la cellule, c'est-à-dire que la latitude et la longitude du point à envoyer au FMS sont calculées respectivement comme la moyenne des latitudes et des longitudes des quatre coins de la cellule.

Ainsi, l'étape 390 peut consister en la conversion de la liste de cellules définissant la route de l'aéronef en une liste de positions géo-référencées, puis l'envoi de ces positions au FMS.

Comme indiquée plus haut, la méthode selon l'invention permet d'obtenir une route comprenant le nombre de points de cheminement le plus faible possible respectant les contraintes opérationnelles. Ainsi, dans les cas où une telle route existe, la route envoyée au FMS sera acceptée par celui-ci, puisque le nombre de points de cheminement sera suffisamment faible, et l'écartement entre les points de cheminement aussi élevé que possible.

Une fois la route envoyée au FMS, celui-ci pourra la traiter pour la convertir en trajectoire, et envoyer les instructions appropriées à un pilote automatique et/ou afficher la trajectoire au pilote de l'aéronef pour suivre la trajectoire.

Dans un ensemble de modes de réalisation de l'invention, la route peut être recalculée ultérieurement. Par exemple, la route peut être recalculée périodiquement, par exemple toutes les 30 secondes, ou lorsque la distance entre l'aéronef et la cible devient inférieure à un seuil de distance.

Le re-calcul de la trajectoire permet de mettre à jour les prédictions, en fonction de l'évolution de la position de l'aéronef, mais aussi le cas échéant de la position du point cible si celui-ci est mobile, et des zones à éviter (par exemple, en cas de déplacement de zones de danger météorologique).

Le re-calcul de la trajectoire permet également, lorsque la route est calculée avec des grilles de taille fixe (par exemple 100x100 cellules), de recalculer celle-ci avec une précision plus fine. En effet, lorsque la taille de la grille est fixe, la résolution des cellules sera d'autant plus fine que la distance entre l'aéronef et le point cible est fine.

Ainsi, un re-calcul périodique de la route, avec une taille de grille fixe permet de calculer la route avec un temps bornée et déterministe (puisque le temps de calcul est globalement proportionnel au nombre de cellules), tout en bénéficiant d'une précision de calcul aussi élevée que nécessaire lors de l'approche du point cible.

L'invention a été décrite ci-dessus dans des cas de calcul de route d'un aéronef vers un unique point cible, en deux dimensions. Cependant, l'invention n'est pas restreinte à ces exemples.

Par exemple, l'invention peut être étendue à un calcul de route en 3D. Dans ce cas, il suffit de définir l'environnement de l'aéronef et du point cible sous la forme d'une grille 3D, avec différents niveaux d'altitude, de définir les zones de zones à éviter selon les cellules en 3 dimensions, d'effectuer une propagation d'intérêt en 3D, et de convertir les positions des cellules 3D en une liste de coordonnées (latitude, longitude, altitude) à envoyer au FMS.

L'invention est également applicable à des calculs de route à partir de plusieurs aéronefs, ou vers plusieurs cibles : l'intérêt peut être propagé à partir de plusieurs cibles, et/ou atteindre plusieurs aéronefs. Si plusieurs aéronefs sont utilisés. l'aéronef vers lequel s'est propagé en premier l'intérêt, ou l'aéronef pour lequel le niveau d'intérêt est le plus fort à une itération de propagation donnée, peut être utilisé pour la mission. Dans ce cas, la méthode permet de sélectionner automatiquement l'aéronef le mieux placé pour accomplir la mission. Dans le cas où plusieurs cibles sont utilisées, le suivi, à partir de l'aéronef de l'intérêt le plus fort permet de remonter vers la cible ayant diffusé l'intérêt de la manière la plus directe, et donc la cible pour laquelle la meilleure route est disponible. Dans un ensemble de mode de réalisation de l'invention, l'intérêt peut être diffusé depuis plusieurs cibles, et une route calculée dès que l'intérêt s'est propagé jusqu'à un aéronef au moins.

Les exemples ci-dessus démontrent la capacité de l'invention à calculer une route optimale pour un aéronef. Ils ne sont cependant donnés qu'à titre d'exemple et ne limitent en aucun cas la portée de l'invention, définie dans les revendications ci-dessous.

## Revendications

1. Méthode (300) de détermination d'une route d'un aéronef (210) vers un point cible (220) dans l'environnement (200) de l'aéronef comprenant :
- l'obtention (310) d'au moins une grille (400) représentant l'environnement (200) de l'aéronef, d'une cellule position de l'aéronef (410) et d'une cellule position du point cible (420) dans la grille, l'au moins une grille (400) stockant pour chaque cellule les positions géo-référencées des 4 coins de la cellule, un coefficient d'absorption définissant la possibilité d'une trajectoire de l'aéronef de traverser les cellules, et un niveau d'intérêt indiquant l'intérêt pour l'aéronef de sélectionner une cellule pour rejoindre le point cible ;
- la définition (320), pour un ensemble de cellules de l'au moins une grille (400), de coefficients d'absorption compris entre 0 et 1 définissant la possibilité d'une trajectoire de l'aéronef de traverser les cellules, en fonction d'au moins un élément choisi parmi un ensemble de zones à éviter, de contraintes d'initialisation de trajectoire et de contraintes d'approche ;
- la définition (330), pour au moins une cellule autour du point cible, d'un niveau d'intérêt égal à un seuil d'intérêt prédéfini, et d'un niveau d'intérêt plus faible pour les autres cellules de la grille ;
- une pluralité d'itérations, jusqu'à validation d'un critère d'arrêt (350) d'une affectation (340) à chaque cellule de la grille, sauf ladite au moins une cellule autour du point cible, d'un niveau d'intérêt égal à une moyenne pondérée de niveaux d'intérêts de cellules d'un voisinage de ladite cellule, multiplié par une valeur égale à 1 moins le coefficient d'absorption pour les cellules dudit ensemble ;
- si, à la validation du critère d'arrêt, le niveau d'intérêt de la cellule position de l'aéronef est nul (360), l'activation d'une procédure de sortie (370) ;
- sinon, une détermination itérative (380) d'une liste de points de cheminement ;
- l'envoi (390) de la liste de points de cheminement à un système de gestion de vol ; dans laquelle la détermination itérative de la liste de points de cheminement est obtenue en initialisant la liste avec la position de l'aéronef et, tant que l'au moins une cellule autour du point cible n'a pas été atteinte, déterminant un point suivant, à partir du point de cheminement courant dans la liste, en :
▪ effectuant une sélection d'une première cellule candidate, comme la cellule d'un voisinage du point de cheminement courant présentant le niveau d'intérêt le plus favorable ;
▪ sélectionnant une seconde cellule candidate, comme la cellule d'un voisinage de la première cellule candidate présentant le niveau d'intérêt le plus favorable ;
▪ vérifiant la présence d'une cellule non traversable par l'aéronef entre la seconde cellule candidate et le point de cheminement courant ;
▪ si une cellule non traversable par l'aéronef est présente entre la seconde cellule candidate et le point de cheminement courant :
• ajoutant la première cellule candidate à la liste comme point de cheminement courant ;
• revenant à la sélection de la première cellule candidate ;
▪ si aucune cellule non traversable par l'aéronef n'est présente entre la seconde cellule candidate et le point de cheminement courant :
• remplaçant la première cellule candidate par la seconde cellule candidate ;
• revenant à l'étape de sélection d'une seconde cellule candidate.

2. Méthode selon la revendication 1, dans laquelle la grille (400) est construite selon une loxodromie.

3. Méthode selon l'une des revendications 1 à 2, dans laquelle la grille (400) possède une taille prédéfinie, et les cellules position de l'aéronef (410) et cellule position du point cible (420) ont une position prédéfinie dans la grille, ladite méthode comprenant une étape d'association à chaque cellule des coordonnées géo-référencées en fonction desdites taille et positions prédéfinies.

4. Méthode selon l'une des revendications 1 à 3, dans laquelle la définition (320), pour un ensemble de cellules de l'au moins une grille (400), de coefficients d'absorption définissant la possibilité d'une trajectoire de l'aéronef de traverser les cellules, comprend la définition, autour de la position l'aéronef (410), d'une ellipse de cellules selon un angle de courbure maximal de l'aéronef présentant un coefficient d'absorption empêchant la diffusion de l'intérêt dans l'ensemble de cellules (430), incisée dans le sens du déplacement ou du décollage de l'aéronef.

5. Méthode selon l'une des revendications 1 à 4, dans laquelle la définition de coefficients d'absorption (320) comprend la définition, autour de la position du point cible (420), d'une ellipse de cellules (440) présentant un coefficient d'absorption supérieur ou égal à un seuil prédéfini, dans laquelle est effectuée au moins une incision dans le sens d'au moins un secteur d'incidence pour l'approche du point cible.

6. Méthode selon la revendication 5, dans laquelle l'au moins une cellule autour du point cible, pour laquelle est défini un niveau d'intérêt égal à un seuil d'intérêt prédéfini, comprend toutes les cellules de l'au moins une incision.

7. Méthode selon l'une des revendications 1 à 6, dans laquelle la définition de coefficients d'absorption (320) comprend la définition, pour un ensemble de cellules dont l'un des coins au moins est situé dans une zones à éviter, d'un coefficient d'absorption supérieur ou égal à un seuil prédéfini.

8. Méthode selon l'une des revendications 1 à 7, dans laquelle le critère d'arrêt est validé si au moins une condition est vérifiée parmi les conditions suivantes :
- le niveau d'intérêt de la cellule position de l'aéronef (410) est supérieur à 0;
- le nombre d'itérations effectuées est inférieur ou égal à un seuil maximal d'itérations prédéfini.

9. Méthode selon l'une des revendications 1 à 8, dans laquelle l'envoi (390) de la liste de points de cheminement au système de gestion de vol comprend :
- la conversion de la liste de points de cheminement définis par des cellules en une liste de position géo-référencées obtenues respectivement par une interpolation linéaire des positions géo-référencées des coins des cellules ;
- l'envoi de la liste de positions géo-référencées au système de gestion de vol.

10. Programme d'ordinateur comprenant des instructions de code de programme enregistrées sur un support lisible par ordinateur pour déterminer une route d'un aéronef (210) vers un point cible (220) dans l'environnement (200) de l'aéronef lorsque ledit programme fonctionne sur un ordinateur, lesdites instructions de code de programme étant configurées pour :
- obtenir (310) au moins une grille (400) représentant l'environnement (200) de l'aéronef, une cellule position de l'aéronef (410) et une cellule position du point cible (420) dans la grille, l'au moins une grille (400) stockant pour chaque cellule les positions géo-référencées des 4 coins de la cellule, un coefficient d'absorption compris entre 0 et 1 définissant la possibilité d'une trajectoire de l'aéronef de traverser les cellules, et un niveau d'intérêt indiquant l'intérêt pour l'aéronef de sélectionner une cellule pour rejoindre le point cible ;
- définir (320), pour un ensemble de cellules de l'au moins une grille (400), des coefficients d'absorption définissant la possibilité d'une trajectoire de l'aéronef de traverser les cellules, en fonction d'au moins un élément choisi parmi un ensemble de zones à éviter, de contraintes d'initialisation de trajectoire et de contraintes d'approche ;
- définir (330), pour au moins une cellule autour du point cible, un niveau d'intérêt égal à un seuil d'intérêt prédéfini, et un niveau d'intérêt plus faible pour les autres cellules de la grille ;
- effectuer une pluralité d'itérations, jusqu'à validation d'un critère d'arrêt (350), d'une affectation (340) à chaque cellule de la grille, sauf ladite au moins une cellule autour du point cible, d'un niveau d'intérêt égal à une moyenne pondérée de niveaux d'intérêts de cellules d'un voisinage de ladite cellule, multiplié par une valeur égale à 1 moins le coefficient d'absorption pour les cellules dudit ensemble ;
- si, à la validation du critère d'arrêt, le niveau d'intérêt de la cellule position de l'aéronef est nul (360), activer une procédure de sortie (370) ;
- sinon, effectuer une détermination itérative (380) d'une liste de points de cheminement ;
- envoyer (390) la liste de points de cheminement à un système de gestion de vol ; dans lequel la détermination itérative de la liste de points de cheminement est obtenue en initialisant la liste avec la position de l'aéronef et, tant que l'au moins une cellule autour du point cible n'a pas été atteinte, déterminant un point suivant, à partir du point de cheminement courant dans la liste, en :
▪ effectuant une sélection d'une première cellule candidate, comme la cellule d'un voisinage du point de cheminement courant présentant le niveau d'intérêt le plus favorable ;
▪ sélectionnant une seconde cellule candidate, comme la cellule d'un voisinage de la première cellule candidate présentant le niveau d'intérêt le plus favorable ;
▪ vérifiant la présence d'une cellule non traversable par l'aéronef entre la seconde cellule candidate et le point de cheminement courant ;
▪ si une cellule non traversable par l'aéronef est présente entre la seconde cellule candidate et le point de cheminement courant :
• ajoutant la première cellule candidate à la liste comme point de cheminement courant ;
• revenant à la sélection de la première cellule candidate ;
▪ si aucune cellule non traversable par l'aéronef n'est présente entre la seconde cellule candidate et le point de cheminement courant :
• remplaçant la première cellule candidate par la seconde cellule candidate ;
• revenant à l'étape de sélection d'une seconde cellule candidate.

11. Système de gestion de mission (120) d'un aéronef comprenant des moyens de calcul pour déterminer une route de l'aéronef (210) vers un point cible (220) dans l'environnement (200) de l'aéronef, lesdits moyens de calcul étant configurées pour :
- obtenir (310) au moins une grille (400) représentant l'environnement (200) de l'aéronef, une cellule position de l'aéronef (410) et une cellule position du point cible (420) dans la grille, l'au moins une grille (400) stockant pour chaque cellule les positions géo-référencées des 4 coins de la cellule, un coefficient d'absorption compris entre 0 et 1 définissant la possibilité d'une trajectoire de l'aéronef de traverser les cellules, et un niveau d'intérêt indiquant l'intérêt pour l'aéronef de sélectionner une cellule pour rejoindre le point cible ;
- définir (320), pour un ensemble de cellules de l'au moins une grille (400), des coefficients d'absorption définissant la possibilité d'une trajectoire de l'aéronef de traverser les cellules, en fonction d'au moins un élément choisi parmi un ensemble de zones à éviter, de contraintes d'initialisation de trajectoire et de contraintes d'approche ;
- définir (330), pour au moins une cellule autour du point cible, un niveau d'intérêt égal à un seuil d'intérêt prédéfini, et un niveau d'intérêt plus faible pour les autres cellules de la grille ;
- effectuer une pluralité d'itérations, jusqu'à validation d'un critère d'arrêt (350), d'une affectation (340) à chaque cellule de la grille, sauf ladite au moins une cellule autour du point cible, d'un niveau d'intérêt égal à une moyenne pondérée de niveaux d'intérêts de cellules d'un voisinage de ladite cellule, multiplié par une valeur égale à 1 moins le coefficient d'absorption pour les cellules dudit ensemble ;
- si, à la validation du critère d'arrêt, le niveau d'intérêt de la cellule position de l'aéronef est nul (360), activer une procédure de sortie (370) ;
- sinon, effectuer une détermination itérative (380) d'une liste de points de cheminement envoyer (390) la liste de points de cheminement à un système de gestion de vol (110) ; dans lequel la détermination itérative de la liste de points de cheminement est obtenue en initialisant la liste avec la position de l'aéronef et, tant que l'au moins une cellule autour du point cible n'a pas été atteinte, déterminant un point suivant, à partir du point de cheminement courant dans la liste, en :
▪ effectuant une sélection d'une première cellule candidate, comme la cellule d'un voisinage du point de cheminement courant présentant le niveau d'intérêt le plus favorable ;
▪ sélectionnant une seconde cellule candidate, comme la cellule d'un voisinage de la première cellule candidate présentant le niveau d'intérêt le plus favorable ;
▪ vérifiant la présence d'une cellule non traversable par l'aéronef entre la seconde cellule candidate et le point de cheminement courant ;
▪ si une cellule non traversable par l'aéronef est présente entre la seconde cellule candidate et le point de cheminement courant :
• ajoutant la première cellule candidate à la liste comme point de cheminement courant ;
• revenant à la sélection de la première cellule candidate ;
▪ si aucune cellule non traversable par l'aéronef n'est présente entre la seconde cellule candidate et le point de cheminement courant :
• remplaçant la première cellule candidate par la seconde cellule candidate ;
• revenant à l'étape de sélection d'une seconde cellule candidate.

## Patentansprüche

1. Verfahren (300) zum Bestimmen einer Route eines Luftfahrzeugs (210) zu einem Zielpunkt (220) in der Umgebung (200) des Luftfahrzeugs, das Folgendes beinhaltet:
- Erhalten (310) mindestens eines Rasters (400), das die Umgebung (200) des Luftfahrzeugs, eine Luftfahrzeugpositionszelle (410) und eine Zielpunktpositionszelle (420) in dem Raster darstellt, wobei das mindestens eine Raster (400) für jede Zelle die georeferenzierten Positionen der vier Ecken der Zelle, ein Absorptionskoeffizient, der die Möglichkeit definiert, dass eine Flugbahn des Luftfahrzeugs die Zellen durchquert und einen Interessensgrad speichert, der das Interesse des Luftfahrzeugs am Auswählen einer Zelle zum Erreichen des Zielpunkts anzeigt;
- Definieren (320), für eine Gruppe von Zellen des mindestens einen Rasters (400), von Absorptionskoeffizienten zwischen 0 und 1, die die Möglichkeit, dass eine Flugbahn des Luftfahrzeugs die Zellen durchquert, definieren, in Abhängigkeit von mindestens einem Element, ausgewählt aus einer Gruppe von zu vermeidenden Zonen, von Flugbahninitialisierungsbeschränkungen und von Anflugbeschränkungen;
- Definieren (330), für mindestens eine Zelle um den Zielpunkt herum, eines Interessensgrades, der gleich einer vordefinierten Interessensschwelle ist, und eines niedrigeren Interessensgrades für die anderen Zellen des Rasters;
- mehrere Iterationen, bis zur Validierung eines Stoppkriteriums (350), einer Zuweisung (340), mit Ausnahme der mindestens einen Zelle um den Zielpunkt, eines Interessensgrades zu jeder Zelle des Rasters, das gleich einem gewichteten Durchschnitt von Interessensgraden von Zellen in der Nähe der Zelle ist, multipliziert mit einem Wert von gleich 1 minus dem Absorptionskoeffizienten für die Zellen der Gruppe;
- Aktivieren einer Austrittsprozedur (370), wenn bei der Validierung des Stoppkriteriums der Interessensgrad der Positionszelle des Luftfahrzeugs gleich Null ist (360);
- andernfalls iteratives Bestimmen (380) einer Liste von Wegpunkten;
- Senden (390) der Wegpunktliste zu einem Flugmanagementsystem; wobei das iterative Bestimmen der Wegpunktliste durch Initialisieren der Liste mit der Position des Luftfahrzeugs und, solange mindestens eine Zelle um den Zielpunkt nicht erreicht wurde, durch Bestimmen eines nächsten Punkts vom aktuellen Wegpunkt in der Liste erzielt wird durch:
▪ Bewirken einer Auswahl einer ersten Kandidatenzelle als die Zelle in der Nähe des aktuellen Wegpunkts mit dem günstigsten Interessensgrad;
▪ Auswählen einer zweiten Kandidatenzelle als die Zelle in der Nähe der ersten Kandidatenzelle mit dem günstigsten Interessensgrad;
▪ Überprüfen der Anwesenheit einer von dem Luftfahrzeug nicht durchfliegbaren Zelle zwischen der zweiten Kandidatenzelle und dem aktuellen Wegpunkt;
▪ falls eine von dem Luftfahrzeug nicht durchfliegbare Zelle zwischen der zweiten Kandidatenzelle und dem aktuellen Wegpunkt vorhanden ist:
• Hinzufügen der ersten Kandidatenzelle zu der Liste als aktueller Wegpunkt;
• Zurückkehren zur Auswahl der ersten Kandidatenzelle;
▪ wenn sich zwischen der zweiten Kandidatenzelle und dem aktuellen Wegpunkt keine von einem Luftfahrzeug durchfliegbare Zelle befindet:
• Ersetzen der ersten Kandidatenzelle durch die zweite Kandidatenzelle;
• Zurückkehren zum Schritt des Auswählens einer zweiten Kandidatenzelle.

2. Verfahren nach Anspruch 1, wobei das Raster (400) entsprechend einer Loxodrome konstruiert ist.

3. Verfahren nach einem der Ansprüche 1 bis 2, wobei das Raster (400) eine vordefinierte Größe hat und die Luftfahrzeugpositionszellen (410) und die Zielpunktpositionszelle (420) eine vordefinierte Position im Raster haben, wobei das Verfahren einen Schritt des Assoziierens der georeferenzierten Koordinaten mit jeder Zelle in Abhängigkeit von den vordefinierten Größen und Positionen beinhaltet.

4. Verfahren nach einem der Ansprüche 1 bis 3, wobei das Definieren (320), für eine Gruppe von Zellen des mindestens einen Rasters (400), von Absorptionskoeffizienten, die die Möglichkeit, dass eine Flugbahn des Luftfahrzeugs die Zellen durchquert, definieren, das Definieren (320), um die Luftfahrzeugposition (410), einer Ellipse von Zellen mit einem maximalen Krümmungswinkel des Luftfahrzeugs mit einem Absorptionskoeffizienten umfasst, der die Streuung des Interesses in der Gruppe von Zellen (430) verhindert, die in Richtung der Bewegung oder des Starts des Luftfahrzeugs eingeschnitten ist.

5. Verfahren nach einem der Ansprüche 1 bis 4, wobei das Definieren von Absorptionskoeffizienten (320) das Definieren, um die Position des Zielpunkts (420), einer Ellipse von Zellen (440) mit einem Absorptionskoeffizienten genauso groß wie oder größer als ein vordefinierter Schwellenwert beinhaltet, in der mindestens ein Einschnitt in Richtung mindestens eines Einfallssektors zur Annäherung an den Zielpunkt erfolgt.

6. Verfahren nach Anspruch 5, wobei die mindestens eine Zelle um den Zielpunkt, für die ein Interessensgrad gleich einer vordefinierten Interessensschwelle definiert ist, alle Zellen des mindestens einen Einschnitts umfasst.

7. Verfahren nach einem der Ansprüche 1 bis 6, wobei das Definieren von Absorptionskoeffizienten (320) das Definieren, für eine Gruppe von Zellen, von denen sich mindestens eine Ecke in einer zu vermeidenden Zone befindet, eines Absorptionskoeffizienten beinhaltet, der genauso groß wie oder größer als ein vordefinierter Schwellenwert ist.

8. Verfahren nach einem der Ansprüche 1 bis 7, wobei das Stoppkriterium gültig ist, wenn mindestens eine der folgenden Bedingungen erfüllt ist:
- der Interessensgrad der Luftfahrzeugpositionszelle (410) ist größer als 0;
- die Anzahl von durchgeführten Iterationen ist genauso groß wie oder kleiner als eine vordefinierte maximale Iterationsschwelle.

9. Verfahren nach einem der Ansprüche 1 bis 8, wobei das Senden (390) der Wegpunktliste an das Flugmanagementsystem Folgendes beinhaltet:
- Umwandeln der durch die Zellen definierten Wegpunktliste in eine Liste von georeferenzierten Positionen, die jeweils durch eine lineare Interpolation der georeferenzierten Positionen der Ecken der Zellen erhalten werden;
- Senden der Liste von georeferenzierten Positionen zum Flugmanagementsystem.

10. Computerprogramm mit Programmcode-Befehlen, die auf einem computerlesbaren Medium gespeichert sind, zum Bestimmen einer Route eines Luftfahrzeugs (210) zu einem Zielpunkt (220) in der Umgebung (200) des Luftfahrzeugs, wenn das Programm auf einem Computer läuft, wobei die Programmcode-Befehle konfiguriert sind zum:
- Erhalten (310) mindestens eines Rasters (400), das die Umgebung (200) des Luftfahrzeugs, eine Luftfahrzeugpositionszelle (410) und eine Zielpunktpositionszelle (420) in dem Raster darstellt, wobei das mindestens eine Raster (400) für jede Zelle die georeferenzierten Positionen der vier Ecken der Zelle speichert, wobei ein Absorptionskoeffizient zwischen 0 und 1 die Möglichkeit, dass eine Flugbahn des Luftfahrzeugs die Zellen durchquert und einen Interessensgrad definiert, der das Interesse des Luftfahrzeugs am Auswählen einer Zelle zum Erreichen des Zielpunkts anzeigt;
- Definieren (320), für eine Gruppe von Zellen des mindestens einen Rasters (400), von Absorptionskoeffizienten, die die Möglichkeit, dass eine Flugbahn des Luftfahrzeugs die Zellen durchquert definieren, in Abhängigkeit von mindestens einem Element, ausgewählt aus einer Gruppe von zu vermeidenden Zonen, von Flugbahninitialisierungsbeschränkungen und von Anflugbeschränkungen;
- Definieren (330), für mindestens eine Zelle um den Zielpunkt herum, eines Interessensgrades, der gleich einer vordefinierten Interessensschwelle ist, und eines niedrigeren Interessensgrades für die anderen Zellen des Rasters;
- Bewirken der Durchführung mehrerer Iterationen, bis zur Validierung eines Stoppkriteriums (350), einer Zuweisung (340), mit Ausnahme der mindestens einen Zelle um den Zielpunkt, eines Interessensgrades zu jeder Zelle des Rasters, das gleich einem gewichteten Durchschnitt von Interessensgraden von Zellen in der Nähe der Zelle ist, multipliziert mit einem Wert von gleich 1 minus dem Absorptionskoeffizienten für die Zellen der Gruppe;
- Aktivieren einer Austrittsprozedur (370), wenn bei der Validierung des Stoppkriteriums der Interessensgrad der Zellenposition des Luftfahrzeugs gleich Null ist (360);
- andernfalls Bewirken einer iterativen Bestimmung (380) einer Liste von Wegpunkten;
- Senden (390) der Wegpunktliste zu einem Flugmanagementsystem;
wobei das iterative Bestimmen der Wegpunktliste durch Initialisieren der Liste mit der Position des Luftfahrzeugs und, solange mindestens eine Zelle um den Zielpunkt nicht erreicht wurde, durch Bestimmen eines nächsten Punkts vom aktuellen Wegpunkt in der Liste erzielt wird durch:
▪ Bewirken einer Auswahl einer ersten Kandidatenzelle als die Zelle in der Nähe des aktuellen Wegpunkts mit dem günstigsten Interessensgrad;
▪ Auswählen einer zweiten Kandidatenzelle als die Zelle in der Nähe der ersten Kandidatenzelle mit dem günstigsten Interessensgrad;
▪ Überprüfen der Anwesenheit einer von dem Luftfahrzeug nicht durchfliegbaren Zelle zwischen der zweiten Kandidatenzelle und dem aktuellen Wegpunkt;
▪ wenn eine von dem Luftfahrzeug nicht durchfliegbare Zelle zwischen der zweiten Kandidatenzelle und dem aktuellen Wegpunkt vorhanden ist:
• Hinzufügen der ersten Kandidatenzelle zu der Liste als aktueller Wegpunkt;
• Zurückkehren zur Auswahl der ersten Kandidatenzelle;
▪ wenn sich zwischen der zweiten Kandidatenzelle und dem aktuellen Wegpunkt keine von einem Luftfahrzeug durchfliegbare Zelle befindet:
• Ersetzen der ersten Kandidatenzelle durch die zweite Kandidatenzelle;
• Zurückkehren zum Schritt des Auswählens einer zweiten Kandidatenzelle.

11. Flugmissionsmanagementsystem (120) eines Luftfahrzeugs mit Rechenmitteln zum Bestimmen einer Route des Luftfahrzeugs (210) zu einem Zielpunkt (220) in der Umgebung (200) des Luftfahrzeugs, wobei die Rechenmittel konfiguriert sind zum:
- Erhalten (310) mindestens eines Rasters (400), das die Umgebung (200) des Luftfahrzeugs, eine Luftfahrzeugpositionszelle (410) und eine Zielpunktpositionszelle (420) in dem Raster darstellt, wobei das mindestens eine Raster (400) für jede Zelle die georeferenzierten Positionen der vier Ecken der Zelle, ein Absorptionskoeffizient zwischen 0 und 1, der die Möglichkeit, dass eine Flugbahn des Luftfahrzeugs die Zellen durchquert, definiert und einen Interessensgrad speichert, der das Interesse des Luftfahrzeugs am Auswählen einer Zelle zum Erreichen des Zielpunkts anzeigt;
- Definieren (320), für eine Gruppe von Zellen des mindestens einen Rasters (400), von Absorptionskoeffizienten, die die Möglichkeit, dass eine Flugbahn des Luftfahrzeugs die Zellen durchquert, definieren, in Abhängigkeit von mindestens einem Element, ausgewählt aus einer Gruppe von zu vermeidenden Zonen, von Flugbahninitialisierungsbeschränkungen und von Anflugbeschränkungen;
- Definieren (330), für mindestens eine Zelle um den Zielpunkt herum, eines Interessensgrades, der gleich einer vordefinierten Interessensschwelle ist, und eines niedrigeren Interessensgrades für die anderen Zellen des Rasters;
- Bewirken der Durchführung mehrerer Iterationen, bis zur Validierung eines Stoppkriteriums (350), einer Zuweisung (340), mit Ausnahme der mindestens einen Zelle um den Zielpunkt, eines Interessensgrades zu jeder Zelle des Rasters, das gleich einem gewichteten Durchschnitt von Interessensgraden von Zellen in der Nähe der Zelle ist, multipliziert mit einem Wert von gleich 1 minus dem Absorptionskoeffizienten für die Zellen der Gruppe;
- Aktivieren einer Austrittsprozedur (370), wenn bei der Validierung des Stoppkriteriums der Interessensgrad der Zellenposition des Luftfahrzeugs gleich Null ist (360);
- andernfalls Bewirken einer iterativen Bestimmung (380) einer Liste von Wegpunkten;
- Senden (390) der Wegpunktliste zu einem Flugmanagementsystem (110);
wobei das iterative Bestimmen der Wegpunktliste durch Initialisieren der Liste mit der Position des Luftfahrzeugs und, solange mindestens eine Zelle um den Zielpunkt nicht erreicht wurde, durch Bestimmen eines nächsten Punkts vom aktuellen Wegpunkt in der Liste erzielt wird durch:
▪ Bewirken einer Auswahl einer ersten Kandidatenzelle als die Zelle in der Nähe des aktuellen Wegpunkts mit dem günstigsten Interessensgrad;
▪ Auswählen einer zweiten Kandidatenzelle als die Zelle in der Nähe der ersten Kandidatenzelle mit dem günstigsten Interessensgrad;
▪ Überprüfen der Anwesenheit einer von dem Luftfahrzeug nicht durchfliegbaren Zelle zwischen der zweiten Kandidatenzelle und dem aktuellen Wegpunkt;
▪ wenn eine von dem Luftfahrzeug nicht durchfliegbare Zelle zwischen der zweiten Kandidatenzelle und dem aktuellen Wegpunkt vorhanden ist:
• Hinzufügen der ersten Kandidatenzelle zu der Liste als aktueller Wegpunkt;
• Zurückkehren zur Auswahl der ersten Kandidatenzelle;
▪ wenn sich zwischen der zweiten Kandidatenzelle und dem aktuellen Wegpunkt keine von einem Luftfahrzeug durchfliegbare Zelle befindet:
• Ersetzen der ersten Kandidatenzelle durch die zweite Kandidatenzelle;
• Zurückkehren zum Schritt des Auswählens einer zweiten Kandidatenzelle.

## Claims

1. Method (300) for determining a route of an aircraft (210) towards a target point (220) in the environment (200) of the aircraft, comprising:
- obtaining (310) at least one grid (400) representing the environment (200) of the aircraft, a position cell of the aircraft (410) and a position cell of the target point (420) in the grid, the at least one grid (400) storing, for each cell, the georeferenced positions of the four corners of the cell, an absorption coefficient defining the possibility for a trajectory of the aircraft to cross the cells, and an interest level defining the interest for the aircraft to select a cell to reach the target point;
- defining (320), for a set of cells of the at least one grid (400), absorption coefficients between zero and one defining the possibility for a trajectory of the aircraft to cross the cells, according to at least one element chosen from a set of regions to avoid, trajectory initialization constraints and approach constraints;
- defining (330), for at least one cell around the target point, an interest level equal to a predefined interest threshold, and a lower interest level for the other cells of the grid;
- a plurality of iterations, until a stop criterion (350) is satisfied, of assigning (340), to each cell of the grid except said at least one cell around the target point, an interest level, equal to a weighted average of interest levels of cells in a neighbourhood of said cell, multiplied by a value equal to one minus the absorption coefficient for the cells of said set;
- if, upon satisfying the stop criterion, the interest level of the position cell of the aircraft is zero (360), activating an exit procedure (370);
- otherwise, iteratively determining (380) a list of routing points;
- sending (390) the list of routing points to a flight management system;
wherein iteratively determining the list of routing points is obtained by initialising the list with the position of the aircraft and, as long as at least one cell around the target point has not been reached, determine a next point, from the current routing point in the list by:
▪ making a selection of a first candidate cell as the cell in the neighbourhood of the current routing point exhibiting the most favourable interest level;
▪ selecting a second candidate cell as the cell in the neighbourhood of the first candidate cell exhibiting the most favourable interest level;
▪ checking for the presence of a cell that cannot be crossed by the aircraft between the second candidate cell and the current routing point;
▪ if a cell that cannot be crossed by the aircraft is present between the second candidate cell and the current routing point:
• adding the first candidate cell to the list as the current routing point;
• returning to selecting the first candidate cell;
▪ if no cell that cannot be crossed by the aircraft is present between the second candidate cell and the current routing point:
• replacing the first candidate cell with the second candidate cell;
• returning to the step of selecting a second candidate cell.

2. Method according to claim 1, wherein the grid (400) is constructed following a rhumb line.

3. Method according to any one of claims 1 to 2, wherein the grid (400) has a predefined size, and the position cells of the aircraft (410) and the position cell of the target point (420) have a predefined position on the grid, said method comprising a step of associating, with each cell, georeferenced coordinates according to said predefined size and positions.

4. Method according to one of claims 1 to 3, wherein defining (320), for a set of cells of the at least one grid (400), absorption coefficients that define the possibility for a trajectory of the aircraft to cross the cells, comprises defining, around the position of the aircraft (410), an ellipse of cells according to a maximum angle of curvature of the aircraft exhibiting an absorption coefficient that prevents the diffusion of the interest into the set of cells (430) which is incised in the direction of movement or of take-off of the aircraft.

5. Method according to one of claims 1 to 4, wherein defining absorption coefficients (320) comprises defining, around the position of the target point (420), an ellipse of cells (440) exhibiting an absorption coefficient that is higher than or equal to a predefined threshold, in which at least one incision is made in the direction of at least one sector of incidence for approaching the target point.

6. Method according to claim 5, wherein the at least one cell around the target point, for which an interest level is defined that is equal to a predefined interest threshold, comprises all of the cells of the at least one incision.

7. Method according to one of claims 1 to 6, wherein defining absorption coefficients (320) comprises defining, for a set of cells of which at least one of the corners is located in a region to be avoided, an absorption coefficient that is higher than or equal to a predefined threshold.

8. Method according to one of claims 1 to 7, wherein the stop criterion is satisfied if at least one condition is met from among the following conditions:
- the interest level of the position cell of the aircraft (410) is higher than zero;
- the number of iterations performed is smaller than or equal to a predefined maximum iteration threshold.

9. Method according to one of claims 1 to 8, wherein the sending (390) of the list of routing points to the flight management system comprises:
- converting the list of routing points defined by cells into a list of georeferenced positions obtained, respectively, through linear interpolation of the georeferenced positions of the corners of the cells;
- sending the list of georeferenced positions to the flight management system.

10. Computer program comprising program code instructions stored on a computer-readable medium for determining a route of an aircraft (210) towards a target point (220) in the environment (200) of the aircraft when said program is run on a computer, said program code instructions being configured for:
- obtaining (310) at least one grid (400) representing the environment (200) of the aircraft, a position cell of the aircraft (410) and a position cell of the target point (420) in the grid, the at least one grid (400) storing, for each cell, the georeferenced positions of the four corners of the cell, an absorption coefficient comprised between zero and one defining the possibility for a trajectory of the aircraft to cross the cells, and an interest level indicating the interest for the aircraft to select a cell to reach the target point;
- defining (320), for a set of cells of the at least one grid (400), absorption coefficients defining the possibility for a trajectory of the aircraft to cross the cells, according to at least one element chosen from a set of regions to avoid, trajectory initialization constraints and approach constraints;
- defining (330), for at least one cell around the target point, an interest level equal to a predefined interest threshold, and a lower interest level for the other cells of the grid;
- performing a plurality of iterations, until a stop criterion (350) is satisfied, of assigning (340), to each cell of the grid except said at least one cell around the target point, an interest level, equal to a weighted average of interest levels of cells in a neighbourhood of said cell, multiplied by a value equal to one minus the absorption coefficient for the cells of said set;
- if, upon satisfying the stop criterion, the interest level of the position cell of the aircraft is zero (360), activating an exit procedure (370);
- otherwise, iteratively determining (380) a list of routing points;
- sending (390) the list of routing points to a flight management system;
wherein iteratively determining the list of routing points is obtained by initialising the list with the position of the aircraft and, as long as at least one cell around the target point has not been reached, determine a next point, from the current routing point in the list by:
▪ making a selection of a first candidate cell as the cell in the neighbourhood of the current routing point exhibiting the most favourable interest level;
▪ selecting a second candidate cell as the cell in the neighbourhood of the first candidate cell exhibiting the most favourable interest level;
▪ checking for the presence of a cell that cannot be crossed by the aircraft between the second candidate cell and the current routing point;
▪ if a cell that cannot be crossed by the aircraft is present between the second candidate cell and the current routing point:
• adding the first candidate cell to the list as the current routing point;
• returning to selecting the first candidate cell;
▪ if no cell that cannot be crossed by the aircraft is present between the second candidate cell and the current routing point:
• replacing the first candidate cell with the second candidate cell;
• returning to the step of selecting a second candidate cell.

11. System for managing a mission (120) of an aircraft comprising computing means for determining a route of the aircraft (210) towards a target point (220) in the environment (200) of the aircraft, said computing means being configured for:
- obtaining (310) at least one grid (400) representing the environment (200) of the aircraft, a position cell of the aircraft (410) and a position cell of the target point (420) in the grid, the at least one grid (400) storing, for each cell, the georeferenced positions of the four corners of the cell, an absorption coefficient comprised between zero and one defining the possibility for a trajectory of the aircraft to cross the cells, and an interest level defining the interest for the aircraft to select a cell to reach the target point;
- defining (320), for a set of cells of the at least one grid (400), absorption coefficients defining the possibility for a trajectory of the aircraft to cross the cells, according to at least one element chosen from a set of regions to avoid, trajectory initialization constraints and approach constraints;
- defining (330), for at least one cell around the target point, an interest level equal to a predefined interest threshold, and a lower interest level for the other cells of the grid;
- performing a plurality of iterations, until a stop criterion (350) is satisfied, of assigning (340), to each cell of the grid except said at least one cell around the target point, an interest level, equal to a weighted average of interest levels of cells in a neighbourhood of said cell, multiplied by a value equal to one minus the absorption coefficient for the cells of said set;
- if, upon satisfying the stop criterion, the interest level of the position cell of the aircraft is zero (360), activating an exit procedure (370);
- otherwise, iteratively determining (380) a list of routing points,
- sending (390) the list of routing points to a flight management system (110).
wherein iteratively determining the list of routing points is obtained by initialising the list with the position of the aircraft and, as long as at least one cell around the target point has not been reached, determine a next point, from the current routing point in the list by:
▪ making a selection of a first candidate cell as the cell in the neighbourhood of the current routing point exhibiting the most favourable interest level;
▪ selecting a second candidate cell as the cell in the neighbourhood of the first candidate cell exhibiting the most favourable interest level;
▪ checking for the presence of a cell that cannot be crossed by the aircraft between the second candidate cell and the current routing point;
▪ if a cell that cannot be crossed by the aircraft is present between the second candidate cell and the current routing point:
• adding the first candidate cell to the list as the current routing point;
• returning to selecting the first candidate cell;
▪ if no cell that cannot be crossed by the aircraft is present between the second candidate cell and the current routing point:
• replacing the first candidate cell with the second candidate cell;
• returning to the step of selecting a second candidate cell.
